# EUROPEAN PATENT APPLICATION

(11) **EP 4 404 340 A1**
(43) Date of publication of application: **24.07.2024**
(21) Application number: 22870031.6
(22) Date of filing: 15.09.2022
(51) Int. Cl.: H01M 50/105, H01G 11/78, H01M 50/121, H01M 50/129

(54) **EXTERIOR MATERIAL FOR POWER STORAGE DEVICE, PRODUCTION METHOD THEREFOR, FILM, AND POWER STORAGE DEVICE**

(30) Priority: 15.09.2021 JP 2021150659
(71) Applicant: DAI NIPPON PRINTING CO., LTD., Tokyo 162-8001 (JP)
(72) Inventor: KAGATA, Tsubasa, Tokyo 162-8001 (JP); TABUCHI, Naoto, Tokyo 162-8001 (JP); SASAKI, Miho, Tokyo 162-8001 (JP); OKANO, Ai, Tokyo 162-8001 (JP)
(74) Representative: Müller-Boré & Partner Patentanwälte PartG mbB
(86) International application number: PCT/JP2022/034594
(87) International publication number: WO 2023/042884

(57) **Abstract**

An exterior material for a power storage device, said exterior material constituted from a laminate that at least comprises a base material layer, a barrier layer, and a heat-fusible resin layer in the stated order, wherein the heat-fusible resin layer includes a film, and the film has a tensile elongation at break in a 150°C environment of 750% or more.

## Description

### TECHNICAL FIELD

The present disclosure relates to an exterior material for electrical storage devices, a method for manufacturing the exterior material for electrical storage devices, a film, and an electrical storage device.

### BACKGROUND ART

Various types of electrical storage devices have been developed heretofore, and in every electrical storage device, an exterior material is an essential member for sealing electrical storage device elements such as an electrode and an electrolyte. Metallic exterior materials have been often used heretofore as exterior materials for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior material for electrical storage devices that have often been heretofore used have the disadvantage that it is difficult to keep up with diversification in shape, and there is a limit on weight reduction.

Thus, in recent years, a film-shaped laminate with a base material layer, a barrier layer, and a heat-sealable resin layer laminated in this order has been proposed as an exterior material for electrical storage devices which is easily processed into diversified shapes and is capable of achieving thickness reduction and weight reduction (see, for example, Patent Document 1).

In such an exterior material for electrical storage devices, generally, a concave portion is formed by cold molding, electrical storage device elements such as an electrode and an electrolytic solution are disposed in a space formed by the concave portion, and heat-sealable resin layers are heat-sealed to obtain an electrical storage device with electrical storage device elements housed in the exterior material for electrical storage devices.

### PRIOR ART DOCUMENT

### PATENT DOCUMENT

Patent Document 1: Japanese Patent Laid-open Publication No. 2008-287971

### SUMMARY OF THE INVENTION

### PROBLEMS TO BE SOLVED BY THE INVENTION

With the recent progress of IoT, various types of IoT devices have been distributed in the market. Some types of IoT devices are assumed to be used in a high-temperature environment. Therefore, electrical storage devices mounted in IoT devices are also required to have durability in a wide temperature range. For example, among in-vehicle electronic devices, Iot devices that acquire data from an engine room or the like may be required to have durability in an environment at a high temperature of 125°C.

Among electrical storage devices, for example, lithium ion batteries use an electrolytic solution containing an organic solvent, and therefore are not assumed to be used at a temperature equal to or higher than the boiling point of the solvent in the electrolytic solution. On the other hand, all-solid-state batteries have a solid electrolyte, and therefore can be used in an environment at a higher temperature as compared to current lithium ion batteries and the like, so that it is possible to meet demands on IoT devices that are used in an environment in a wide temperature range as described above.

For example, it is considered that when an all-solid-state battery is used as a battery for driving an electric vehicle and the all-solid-state battery is heated during charging, high-speed charging is possible. A high-temperature environment caused by heating as mentioned above is also a high-temperature environment that is not applied to current lithium ion batteries. Therefore, an exterior material for all-solid-state batteries is also required to have durability in a wide range of temperature environments.

A laminate film heretofore used for a heat-sealable resin layer of an exterior material in an electrolytic solution lithium ion battery containing an organic solvent is formed by a polypropylene film or the like, and has significantly reduced durability (sealing strength) in an environment at a high temperature of 100°C or higher. An exterior material for electrical storage devices in which such a polypropylene film or the like is used for a heat-sealable resin layer cannot be sufficiently applied to an electrical storage device that is used in an environment at a high temperature (for example, about 150°C).

Under these circumstances, a main object of the present disclosure is to provide an exterior material for electrical storage devices which is capable of exhibiting high sealing strength in a high-temperature environment. Another object of the present disclosure is to provide a method for manufacturing the exterior material for electrical storage devices, and an electrical storage device obtained using the exterior material for electrical storage devices. Still another object of the present disclosure is to provide a film capable of exhibiting high sealing strength in a high-temperature environment.

### MEANS FOR SOLVING THE PROBLEM

The inventors of the present disclosure have extensively conducted studies for solving the above-described problems. As a result, it has been found that an exterior material for electrical storage devices which includes a laminate including at least a base material layer, a barrier layer, and a heat-sealable resin layer in this order and in which the heat-sealable resin layer includes a film and a tensile rupture elongation of the film in an environment at 150°C is 750% or more exhibits high sealing strength in an environment at a high temperature (for example, about -150°C).

The present disclosure has been completed by further conducting studies on the basis of the above-mentioned novel findings. That is, the present disclosure provides an invention of an aspect as described below.

An exterior material for electrical storage devices including a laminate including at least a base material layer, a barrier layer and a heat-sealable resin layer in this order,
the heat-sealable resin layer including a film,
the film having a tensile rupture elongation of 750% or more in an environment at 150°C.

### ADVANTAGES OF THE INVENTION

According to the present disclosure, it is possible to provide an exterior material for electrical storage devices which is capable of exhibiting high sealing strength in a high-temperature environment. According to the present disclosure, it is also possible to provide a method for manufacturing the exterior material for electrical storage devices, and an electrical storage device obtained using the exterior material for electrical storage devices. Further, according to the present disclosure, it is also possible to provide a film capable of exhibiting high sealing strength in a high-temperature environment.

### BRIEF DESCRIPTION OF THE DRAWINGS

Fig. 1 is a schematic diagram showing an example of a cross-sectional structure of an exterior material for electrical storage devices according to the present disclosure.
Fig. 2 is a schematic diagram showing an example of a cross-sectional structure of an exterior material for electrical storage devices according to the present disclosure.
Fig. 3 is a schematic diagram showing an example of a cross-sectional structure of an exterior material for electrical storage devices according to the present disclosure.
Fig. 4 is a schematic diagram showing an example of a cross-sectional structure of an exterior material for electrical storage devices according to the present disclosure.
Fig. 5 is a schematic diagram showing an example of a cross-sectional structure of a heat-sealable resin layer (film) of an exterior material for electrical storage devices according to the present disclosure.
Fig. 6 is a schematic diagram showing an example of a cross-sectional structure of a heat-sealable resin layer (including a film) of an exterior material for electrical storage devices according to the present disclosure.
Fig. 7 is a schematic diagram showing an example of a cross-sectional structure of a heat-sealable resin layer (film) of an exterior material for electrical storage devices according to the present disclosure.
Fig. 8 is a schematic diagram for illustrating a method for housing an electrical storage device element in a packaging formed of an exterior material for electrical storage devices according to the present disclosure.
Fig. 9 is a schematic diagram for illustrating a method for measuring the sealing strength.
Fig. 10 is a schematic diagram for illustrating a method for measuring the sealing strength.

### EMBODIMENTS OF THE INVENTION

An exterior material for electrical storage devices according to the present disclosure includes a laminate including at least a base material layer, a barrier layer and a heat-sealable resin layer in this order, the heat-sealable resin layer including a film, the film having a tensile rupture elongation of 750% or more in an environment at 150°C. The exterior material for electrical storage devices according to the present disclosure is capable of exhibiting high sealing strength in a high-temperature environment.

Hereinafter, the exterior material for electrical storage devices according to the present disclosure will be described in detail. In this specification, a numerical range indicated by the term "A to B" means "A or more" and "B or less". For example, the expression of "2 to 15 mm" means 2 mm or more and 15 mm or less.

### 1. Laminated Structure of Exterior Material for Electrical Storage Devices

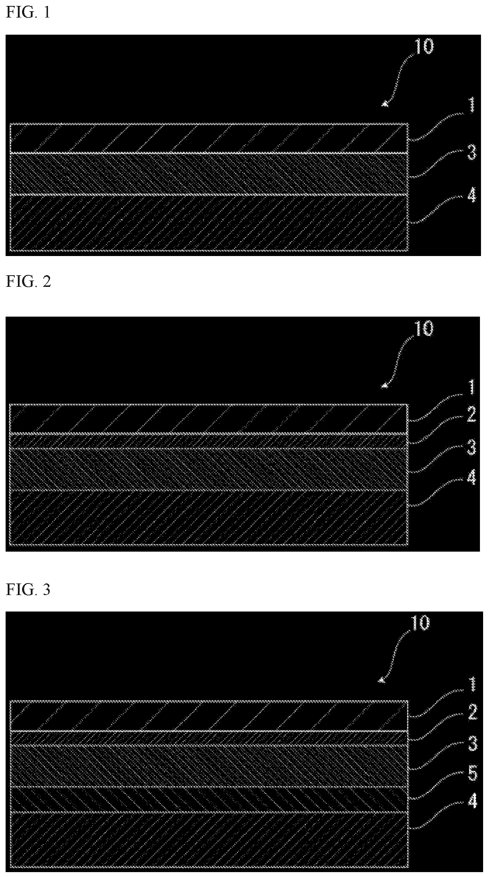

As shown in, for example, Fig. 1, an exterior material 10 for electrical storage devices according to the present disclosure includes a laminate including a base material layer 1, a barrier layer 3 and a heat-sealable resin layer 4 in this order. In the exterior material 10 for electrical storage devices, the base material layer 1 is on the outermost layer side, and the heat-sealable resin layer 4 is an innermost layer. In construction of an electrical storage device using the exterior material 10 for electrical storage devices and an electrical storage device element, the electrical storage device elements are put in a space formed by heat-sealing the peripheral portions of heat-sealable resin layers 4 of the exterior material 10 for electrical storage devices which face each other. In the laminate forming the exterior material 10 for electrical storage devices according to the present disclosure, the heat-sealable resin layer 4 is on the inner side with respect to the barrier layer 3, and the base material layer 1 is on the outer side with respect to the barrier layer 3.

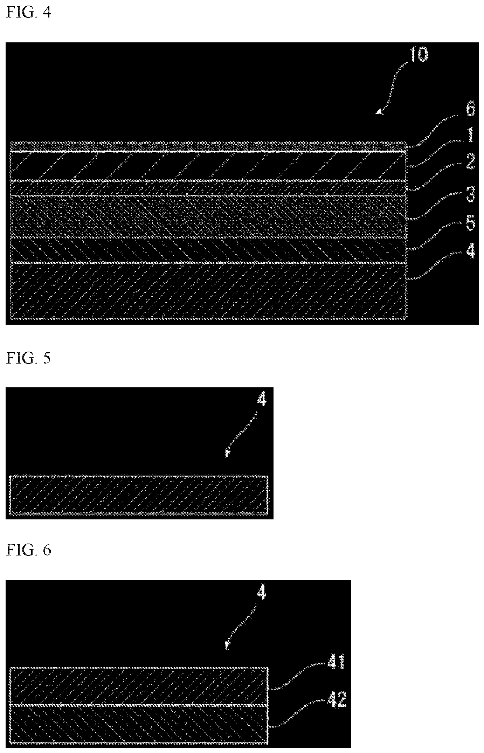

As shown in, for example, Figs. 2 to 4, the exterior material 10 for electrical storage devices may have an adhesive agent layer 2 between the base material layer 1 and the barrier layer 3 if necessary for the purpose of, for example, improving bondability between these layers. As shown in, for example, Figs. 3 and 4, an adhesive layer 5 may be present between the barrier layer 3 and the heat-sealable resin layer 4 if necessary for the purpose of, for example, improving bondability between these layers. As shown in Fig. 4, a surface coating layer 6 or the like may be provided on the outside of the base material layer 1 (on a side opposite to the heat-sealable resin layer 4 side) if necessary.

In the exterior material 10 for electrical storage devices according to the present disclosure, the heat-sealable resin layer 4 includes a film. When the heat-sealable resin layer 4 has a single layer, the heat-sealable resin layer 4 includes a film, and when the heat-sealable resin layer 4 has two or more layers, at least one of the layers contained in the heat-sealable resin layer 4 includes a film. As described later, when the heat-sealable resin layer 4 has two or more layers, it is preferable that a surface of the heat-sealable resin layer 4 on a side opposite to the barrier layer 3 (that is, a surface of the innermost layer of the exterior material 10 for electrical storage devices) is formed of a film.

The thickness of the laminate forming the exterior material 10 for electrical storage devices is not particularly limited, and is, for example, 190 µm or less, preferably about 180 µm or less, about 155 µm or less, or about 120 µm or less, from the viewpoint of cost reduction, energy density improvement, and the like. The thickness of the laminate forming the exterior material 10 for electrical storage devices is preferably about 35 µm or more, about 45 µm or more, or about 60 µm or more, from the viewpoint of maintaining the function of an exterior material for electrical storage devices, which is protection of an electrical storage device element. The laminate forming the exterior material 10 for electrical storage devices is preferably in the range of, for example, about 35 to 190 µm, about 35 to 180 µm, about 35 to 155 µm, about 35 to 120 µm, about 45 to 190 µm, about 45 to 180 µm, about 45 to 155 µm, about 45 to 120 µm, about 60 to 190 µm, about 60 to 180 µm, about 60 to 155 µm, and about 60 to 120 µm, particularly preferably about 60 to 155 µm.

The exterior material 10 for electrical storage devices can be suitably applied to all-solid-state batteries. Here, the thickness of the laminate forming the exterior material 10 for electrical storage devices is not particularly limited, and is preferably about 10,000 µm or less, about 8,000 µm or less, or about 5,000 µm or less from the viewpoint of cost reduction, improvement of the energy density and the like, and preferably about 10 µm or more, about 15 µm or more, or about 20 µm or more from the viewpoint of maintaining the function of the exterior material for all-solid-state batteries, i.e., a function of protecting a battery element. The thickness of the laminate is preferably in the range of, for example, about 10 to 10,000 µm, about 10 to 8,000 µm, about 10 to 5,000 µm, about 15 to 10,000 µm, about 15 to 8,000 µm, about 15 to 5,000 µm, about 20 to 10,000 µm, about 20 to 8,000 µm, or about 20 to 5,000 µm, and particularly preferably about 20 to 5,000 µm.

In the exterior material 10 for electrical storage devices, the ratio of the total thickness of the base material layer 1, the adhesive agent layer 2 provided if necessary, the barrier layer 3, the adhesive layer 5 provided if necessary, the heat-sealable resin layer 4, and the surface coating layer 6 provided if necessary to the thickness (total thickness) of the laminate forming the exterior material 10 for electrical storage devices is preferably 90% or more, more preferably 95% or more, still more preferably 98% or more. As a specific example, when the exterior material 10 for electrical storage devices according to the present disclosure includes the base material layer 1, the adhesive agent layer 2, the barrier layer 3, the adhesive layer 5 and the heat-sealable resin layer 4, the ratio of the total thickness of these layers to the thickness (total thickness) of the laminate forming the exterior material 10 for electrical storage devices is preferably 90% or more, more preferably 95% or more, still more preferably 98% or more. In addition, when the exterior material 10 for electrical storage devices according to the present disclosure is a laminate including the base material layer 1, the adhesive agent layer 2, the barrier layer 3 and the heat-sealable resin layer 4, the ratio of the total thickness of these layers to the thickness (total thickness) of the laminate forming the exterior material 10 for electrical storage devices may be, for example, 80% or more, preferably 90% or more, more preferably 95% or more, still more preferably 98% or more.

In the exterior material 10 for electrical storage devices according to the present disclosure, the sealing strength in an environment at -30°C is preferably 40 N/15 mm or more, more preferably 80 N/15 mm or more as measured by the following measurement method. The upper limit of the sealing strength is, for example, 200 N/15 mm or less, preferably 180 N/15 mm or less. The sealing strength is preferably in the range of about 40 to 200 N/15 mm, about 40 to 180 N/15 mm, about 80 to 200 N/15 mm, or about 80 to 180 N/15 mm.

In the exterior material 10 for electrical storage devices according to the present disclosure, the sealing strength in an environment at 23°C is preferably 40 N/15 mm or more, more preferably 80 N/15 mm or more as measured by the following measurement method. The upper limit of the sealing strength is, for example, 200 N/15 mm or less, preferably 180 N/15 mm or less. The sealing strength is preferably in the range of about 40 to 200 N/15 mm, about 40 to 180 N/15 mm, about 80 to 200 N/15 mm, or about 80 to 180 N/15 mm.

In the exterior material 10 for electrical storage devices according to the present disclosure, the sealing strength in an environment at 120°C is preferably 30 N/15 mm or more, more preferably 50 N/15 mm or more as measured by the following measurement method. The upper limit of the sealing strength is, for example, 150 N/15 mm or less, preferably 120 N/15 mm or less. The sealing strength is preferably in the range of about 30 to 150 N/15 mm, about 30 to 120 N/15 mm, about 50 to 150 N/15 mm, or about 50 to 120 N/15 mm.

In the exterior material 10 for electrical storage devices according to the present disclosure, the sealing strength in an environment at 150°C is preferably 30 N/15 mm or more, more preferably 50 N/15 mm or more as measured by the following measurement method. The upper limit of the sealing strength is, for example, 150 N/15 mm or less, preferably 120 N/15 mm or less. The sealing strength is preferably in the range of about 30 to 150 N/15 mm, about 30 to 120 N/15 mm, about 50 to 150 N/15 mm, or about 50 to 120 N/15 mm.

### <Measurement of sealing strength (environment at -30°C, 23°C, 120°C or 150°C)>

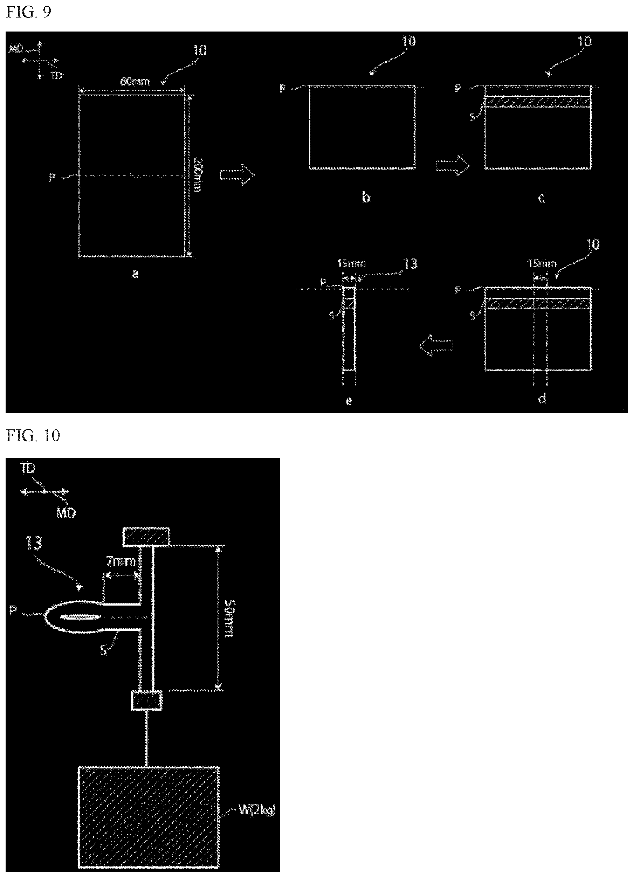

As specified in JIS K 7127: 1999, the sealing strength of the exterior material at a measurement temperature of -30°C, 23°C, 120°C or 150°C is measured as follows. A test sample obtained by cutting the exterior material into a strip shape having a width of 15 mm in a transverse direction is prepared. Specifically, as shown in Fig. 9, each exterior material is cut to a size of 60 mm (transverse direction) × 200 mm (machine direction) (Fig. 9a). Next, the exterior material is double-folded in the machine direction at the position of the fold P (intermediate in the machine direction) in such a manner that the heat-sealable resin layers face each other (Fig. 9b). The heat-sealable resin layers are heat-sealed on the inner side in the machine direction by about 10 mm from the fold P under the conditions of a seal width of 7 mm, a temperature of 240°C, and a surface pressure and sealing time allowing the thickness of the heat-sealed resin layer to become 80 ± 5% of that before sealing (Fig. 9c). In Fig. 9c, the shaded portion S is a heat-sealed portion. Next, a test piece 13 is obtained by cutting the sample in the machine direction (cutting the sample at the position of the two-dot chain line in Fig. 9d) in such a manner that the width in the transverse direction is 15 mm (Fig. 9e). Next, the test piece 13 is allowed to stand at each measurement temperature for 2 minutes, and the heat-sealable resin layer at the heat-sealed part is peeled at a speed of 300 mm/min with a tensile tester in an environment at each temperature (Fig. 10). The maximum strength during the peeling is taken as sealing strength (N/15 mm). The chuck-to-chuck distance is 50 mm.

### 2. Layers Forming Exterior Material for Electrical Storage Devices

### [Base material layer 1]

In the present disclosure, the base material layer 1 is a layer provided for the purpose of, for example, exhibiting a function as a base material of the exterior material for electrical storage devices. The base material layer 1 is located on the outer layer side of the exterior material for electrical storage devices.

The material for forming the base material layer 1 is not particularly limited as long as it has a function as a base material, i.e., at least insulation quality. The base material layer 1 can be formed using, for example, a resin, and the resin may contain additives described later.

When the base material layer 1 is formed of a resin, the base material layer 1 can be formed from, for example, a resin film. When the base material layer 1 is formed from a resin film, a resin film formed in advance may be used as the base material layer 1 in manufacturing of the exterior material 10 for electrical storage devices according to the present disclosure by laminating the base material layer 1 with the barrier layer 3. A resin for forming the base material layer 1 may be formed into a film on the surface of the barrier layer 3 or the like by extrusion molding, coating or the like to obtain the base material layer 1 formed of a resin film. The resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the base material layer 1 include resins such as polyester, polyamide, polyolefin, epoxy resin, acrylic resin, fluororesin, polyurethane, silicone resin and phenol resin, and modified products of these resins. The resin that forms the base material layer 1 may be a copolymer of these resins or a modified product of the copolymer. Further, a mixture of these resins may be used.

It is preferable that the base material layer 1 contains any of these resins as a main component, more preferably polyester or polyamide as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the base material layer 1. For example, the phrase "the base material layer 1 contains polyester or polyamide as a main component" means that the content ratio of polyester or polyamide is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the base material layer 1.

Among the above-mentioned resins, polyester and polyamide are preferable, and polyester is more preferable (polyethylene terephthalate is particularly preferable) as the resin for forming the base material layer 1.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polyamide MXD6 (polymethaxylylene adipamide); alicyclic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 1 contains preferably at least one of a polyester film, a polyamide film and a polyolefin film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, even more preferably at least one of a biaxially stretched polyethylene terephthalate film, a biaxially stretched polybutylene terephthalate film, a biaxially stretched nylon film, and a biaxially stretched polypropylene film.

The base material layer 1 may be a single layer, or may include two or more layers. When the base material layer 1 includes two or more layers, the base material layer 1 may be a laminate obtained by laminating resin films with an adhesive or the like, or a resin film laminate obtained by co-extruding resins to form two or more layers. The resin film laminate obtained by co-extruding resins to form two or more layers may be used as the base material layer 1 in an unstretched state, or may be uniaxially stretched or biaxially stretched and used as the base material layer 1.

Specific examples of the resin film laminate with two or more layers in the base material layer 1 include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 1 is a resin film laminate with two layers, the base material layer 1 is preferably a laminate of a polyester resin film and a polyester resin film, a laminate of a polyamide resin film and a polyamide resin film, or a laminate of a polyester resin film and a polyamide resin film, more preferably a laminate of a polyethylene terephthalate film and a polyethylene terephthalate film, a laminate of a nylon film and a nylon film, or a laminate of a polyethylene terephthalate film and a nylon film. Since the polyester resin is hardly discolored even in the case where for example, an electrolytic solution is deposited on the surface, it is preferable that the polyester resin film is located at the outermost layer of the base material layer 1 when the base material layer 1 is a resin film laminate with two or more layers.

When the base material layer 1 is a resin film laminate with two or more layers, the two or more resin films may be laminated with an adhesive interposed therebetween. Specific examples of the preferred adhesive include the same adhesives as those exemplified for the adhesive agent layer 2 described later. The method for laminating a resin film having two or more layers is not particularly limited, and a known method can be employed. Examples thereof include a dry lamination method, a sand lamination method, an extrusion lamination method and a thermal lamination method, and a dry lamination method is preferable. When the resin film is laminated by a dry lamination method, it is preferable to use a polyurethane adhesive as the adhesive. Here, the thickness of the adhesive is, for example, about 2 to 5 µm. In addition, the lamination may be performed with an anchor coat layer formed on the resin film. Examples of the anchor coat layer include the same adhesives as those exemplified for the adhesive agent layer 2 described later. Here, the thickness of the anchor coat layer is, for example, about 0.01 to 1.0 µm.

Additives such as a slipping agent, a flame retardant, an antiblocking agent, an antioxidant, a light stabilizer, a tackifier and an antistatic agent may be present on at least one of the surface of the base material layer 1 and/or inside the base material layer 1. The additives may be used alone, or may be used in combination of two or more thereof.

In the present disclosure, it is preferable that a slipping agent is present on the surface of the base material layer 1 and/or inside the base material layer 1 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The slipping agents may be used alone, or may be used in combination of two or more thereof, and are preferably used in combination of two or more thereof.

When the slipping agent is present on the surface of the base material layer 1, the amount of the slipping agent present is not particularly limited, and is preferably about 3 mg/m² or more, more preferably about 4 to 15 mg/m², still more preferably about 5 to 14 mg/m².

The slipping agent present on the surface of the base material layer 1 may be one obtained by exuding the slipping agent contained in the resin forming the base material layer 1, or one obtained by applying the slipping agent to the surface of the base material layer 1.

The thickness of the base material layer 1 is not particularly limited as long as a function as a base material is performed, and the thickness of the base material layer 1 is, for example, about 3 to 50 µm, preferably about 10 to 35 µm. When the base material layer 1 is a resin film laminate with two or more layers, the thickness of the resin film forming each layer is preferably about 2 to 25 µm.

### [Adhesive agent layer 2]

In the exterior material for electrical storage devices of the present disclosure, the adhesive agent layer 2 is a layer provided between the base material layer 1 and the barrier layer 3 if necessary for the purpose of enhancing bondability between these layers.

The adhesive agent layer 2 is formed from an adhesive capable of bonding the base material layer 1 and the barrier layer 3. The adhesive used for forming the adhesive agent layer 2 is not limited, and may be any of a chemical reaction type, a solvent volatilization type, a heat melting type, a heat pressing type, and the like. The adhesive agent may be a two-liquid curable adhesive (two-liquid adhesive), a one-liquid curable adhesive (one-liquid adhesive), or a resin that does not involve curing reaction. The adhesive agent layer 2 may be a single layer or a multi-layer.

Specific examples of the adhesive component contained in the adhesive include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesives are preferable. In addition, the adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive include polyurethane adhesives containing a first component containing a polyol compound and a second component containing an isocyanate compound. The polyurethane adhesive is preferably a two-liquid curable polyurethane adhesive having polyol such as polyester polyol, polyether polyol or acrylic polyol as a first component, and aromatic or aliphatic polyisocyanate as a second component. Examples of the polyurethane adhesive include polyurethane adhesives containing an isocyanate compound and a polyurethane compound obtained by reacting a polyol compound with an isocyanate compound in advance. Examples of the polyurethane adhesive include polyurethane adhesives containing a polyol compound and a polyurethane compound obtained by reacting a polyol compound with an isocyanate compound in advance. Examples of the polyurethane adhesive include polyurethane adhesives obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H 12 MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates can be mentioned. It is also possible to use a multimer (e.g. a trimer) as the polyisocyanate compound. Examples of the multimer include adducts, biurets, and nurates. Since the adhesive agent layer 2 is formed of a polyurethane adhesive, excellent electrolytic solution resistance is imparted to the exterior material for electrical storage devices, so that peeling of the base material layer 1 is suppressed even if the electrolytic solution is deposited on the side surface.

Other components may be added to the adhesive agent layer 2 as long as bondability is not inhibited, and the adhesive agent layer 2 may contain a colorant, a thermoplastic elastomer, a tackifier, a filler, and the like. When the adhesive agent layer 2 contains a colorant, the exterior material for electrical storage devices can be colored. As the colorant, known colorants such as pigments and dyes can be used. The colorants may be used alone, or may be used in combination of two or more thereof.

The type of pigment is not particularly limited as long as the bondability of the adhesive agent layer 2 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices.

The average particle diameter of the pigment is not particularly limited, and is, for example, about 0.05 to 5 µm, preferably about 0.08 to 2 µm. The average particle size of the pigment is a median diameter measured by a laser diffraction/scattering particle size distribution measuring apparatus.

The content of the pigment in the adhesive agent layer 2 is not particularly limited as long as the exterior material for electrical storage devices is colored, and the content is, for example, about 5 to 60 mass%, preferably 10 to 40 mass%.

The thickness of the adhesive agent layer 2 is not particularly limited as long as the base material layer 1 and the barrier layer 3 can be bonded to each other, and the thickness is, for example, about 1 µm or more, or about 2 µm or more. The thickness of the adhesive agent layer 2 is, for example, about 10 µm or less, or about 5 µm or less. The thickness of the adhesive agent layer 2 is preferably in the range of about 1 to 10 µm, about 1 to 5 µm, about 2 to 10 µm, or about 2 to 5 µm.

### [Colored Layer]

The colored layer is a layer provided between the base material layer 1 and the barrier layer 3 if necessary (not shown). When the adhesive agent layer 2 is present, the colored layer may be provided between the base material layer 1 and the adhesive agent layer 2 or between the adhesive agent layer 2 and the barrier layer 3. The colored layer may be provided outside the base material layer 1. By providing the colored layer, the exterior material for electrical storage devices can be colored.

The colored layer can be formed by, for example, applying an ink containing a colorant to the surface of the base material layer 1, or the surface of the barrier layer 3. As the colorant, known colorants such as pigments and dyes can be used. The colorants may be used alone, or may be used in combination of two or more thereof.

Specific examples of the colorant contained in the colored layer include the same colorants as those exemplified in the section [Adhesive Agent Layer 2].

### [Barrier layer 3]

In the exterior material for electrical storage devices, the barrier layer 3 is a layer which suppresses at least ingress of moisture.

Examples of the barrier layer 3 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 3 include resin films provided with at least one of these deposited films and resin layers. A plurality of barrier layers 3 may be provided. Preferably, the barrier layer 3 contains a layer formed of a metal material. Specific examples of the metal material forming the barrier layer 3 include aluminum alloys, stainless steel, titanium steel and steel sheets. When the metal material is used as a metal foil, it is preferable that the metal material includes at least one of an aluminum alloy foil and a stainless steel foil.

The aluminum alloy is more preferably a soft aluminum alloy foil formed of, for example, an annealed aluminum alloy from the viewpoint of improving the moldability of the exterior material for electrical storage devices, and is preferably an aluminum alloy foil containing iron from the viewpoint of further improving the moldability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain an exterior material for electrical storage devices which has more excellent moldability. When the content of iron is 9.0 mass% or less, it is possible to obtain an exterior material for electrical storage devices which is more excellent in flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing an exterior material for electrical storage devices which is further excellent in moldability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

When the barrier layer 3 is a metal foil, the barrier layer 3 may perform a function as a barrier layer suppressing at least ingress of moisture, and has a thickness of, for example, about 9 to 200 µm. The thickness of the barrier layer 3 is preferably about 85 µm or less, more preferably about 50 µm or less, still more preferably about 40 µm or less, particularly preferably about 35 µm or less. The thickness of the barrier layer 3 is preferably about 10 µm or more, more preferably about 20 µm or more, still more preferably about 25 µm or more. The total thickness of the barrier layer 3 is preferably in the range of about 10 to 85 µm, about 10 to 50 µm, about 10 to 40 µm, about 10 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. When the barrier layer 3 is formed of an aluminum alloy foil, the thickness thereof is especially preferably in above-described range. In addition, when the barrier layer 3 includes an aluminum alloy foil, the thickness of the barrier layer 3 is preferably about 45 µm or more, more preferably about 50 µm or more, still more preferably about 55 µm or more, and preferably about 85 µm or less, more preferably 75 µm or less, still more preferably 70 µm or less, from the viewpoint of imparting high moldability and high rigidity to the exterior material 10 for electrical storage devices. The thickness of the barrier layer 3 is preferably in the range of about 45 to 85 µm, about 45 to 75 µm, about 45 to 70 µm, about 50 to 85 µm, about 50 to 75 µm, about 50 to 70 µm, about 55 to 85 µm, about 55 to 75 µm, or about 55 to 70 µm. When the exterior material 10 for electrical storage devices has high moldability, deep drawing molding can be facilitated to contribute to an increase in capacity of the electrical storage device. When the capacity of the electrical storage device is increased, the weight of the electrical storage device increases, but the enhancement of the rigidity of the exterior material 10 for electrical storage devices can contribute to high hermeticity of the electrical storage device. In particular, when the barrier layer 3 includes a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

When the barrier layer 3 is a metal foil, it is preferable that a corrosion-resistant film is provided at least on a surface on a side opposite to the base material layer for preventing dissolution and corrosion. The barrier layer 3 may include a corrosion-resistant film on each of both surfaces. Here, the corrosion-resistant film refers to a thin film obtained by subjecting the surface of the barrier layer to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (e.g. acid resistance and alkali resistance) to the barrier layer. Specifically, the corrosion-resistant film means a film which improves the acid resistance of the barrier layer (acid-resistant film), a film which improves the alkali resistance of the barrier layer (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 3 is provided with the corrosion-resistant film, the barrier layer 3 is regarded as including the corrosion-resistant film.

The corrosion-resistant film exhibits the effects of preventing delamination between the barrier layer (e.g. an aluminum alloy foil) and the base material layer during molding of the exterior material for electrical storage devices; preventing dissolution and corrosion of the surface of the barrier layer, particularly dissolution and corrosion of aluminum oxide present on the surface of the barrier layer when the barrier layer is an aluminum alloy foil, by hydrogen fluoride generated by reaction of an electrolyte with moisture; improving the bondability (wettability) of the surface of the barrier layer; preventing delamination between the base material layer and the barrier layer during heat-sealing; and preventing delamination between the base material layer and the barrier layer during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a well-known treatment method such as an alkali immersion method, an electrolytic cleaning method, an acid cleaning method, an electrolytic acid cleaning method or an acid activation method, and a treatment solution containing a metal phosphate such as Cr (chromium) phosphate, Ti (titanium) phosphate, Zr (zirconium) phosphate or Zn (zinc) phosphate or a mixture of these metal salts as a main component, a treatment solution containing any of non-metal salts of phosphoric acid and a mixture of these non-metal salts as a main component, or a treatment solution formed of a mixture of any of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

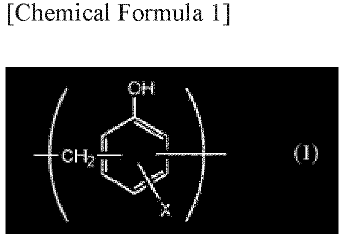

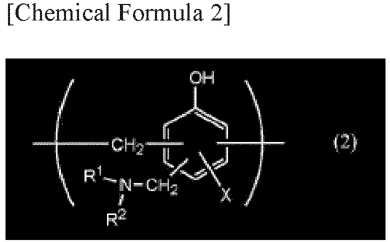

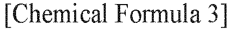

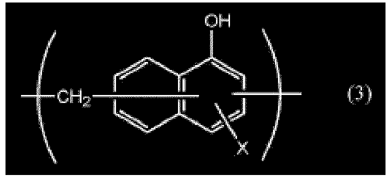

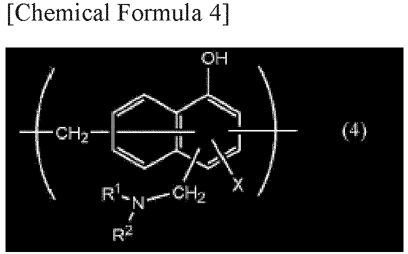

In the general formulae (1) to (4), X represents a hydrogen atom, a hydroxy group, an alkyl group, a hydroxyalkyl group, an allyl group, or a benzyl group. R¹ and R² are the same or different, and each represents a hydroxy group, an alkyl group, or a hydroxyalkyl group. In the general formulae (1) to (4), examples of the alkyl group represented by X, R¹ and R² include linear or branched alkyl groups with a carbon number of 1 to 4, such as a methyl group, an ethyl group, an n-propyl group, an isopropyl group, an n-butyl group, an isobutyl group, and a tert-butyl group. Examples of the hydroxyalkyl group represented by X, R¹ and R² include linear or branched alkyl groups with a carbon number of 1 to 4, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In the general formulae (1) to (4), the alkyl group and the hydroxyalkyl group represented by X, R¹ and R² may be the same or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1,000,000, and more preferably about 1,000 to 20,000, for example. The aminated phenol polymer is produced by, for example, performing polycondensation of a phenol compound or a naphthol compound with formaldehyde to prepare a polymer including repeating units represented by the general formula (1) or the general formula (3), and then introducing a functional group (-CH₂NR¹R²) into the obtained polymer using formaldehyde and an amine (R¹R²NH). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle diameter of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. In addition, the phosphoric acid or phosphate is preferably condensed phosphoric acid or a condensed phosphate.

Examples of the corrosion-resistant film include films formed by applying a dispersion of fine particles of a metal oxide such as aluminum oxide, titanium oxide, cerium oxide or tin oxide or barium sulfate in phosphoric acid to the surface of the barrier layer and performing baking treatment at 150°C or higher.

The corrosion-resistant film may have a laminated structure in which at least one of a cationic polymer and an anionic polymer is further laminated if necessary. Examples of the cationic polymer and the anionic polymer include those described above.

The composition of the corrosion-resistant film can be analyzed by, for example, time-of-flight secondary ion mass spectrometry.

The amount of the corrosion-resistant film to be formed on the surface of the barrier layer 3 in the chemical conversion treatment is not particularly limited, but for example when the coating-type chromate treatment is performed, and it is desirable that the chromic acid compound be contained in an amount of, for example, about 0.5 to 50 mg, preferably about 1.0 to 40 mg, in terms of chromium, the phosphorus compound be contained in an amount of, for example, about 0.5 to 50 mg, preferably about 1.0 to 40 mg, in terms of phosphorus, and the aminated phenol polymer be contained in an amount of, for example, about 1.0 to 200 mg, preferably about 5.0 to 150 mg, per 1 m² of the surface of the barrier layer 3.

The thickness of the corrosion-resistant film is not particularly limited, and is preferably about 1 nm to 20 µm, more preferably about 1 nm to 100 nm, still more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of Ce₂PO₄⁺, CePO₄⁻ and the like) and secondary ions from, for example, Cr, P and O (e.g. at least one of CrPO₂⁺, CrPO₄⁻ and the like) are detected.

The chemical conversion treatment is performed in the following manner: a solution containing a compound to be used for formation of a corrosion-resistant film is applied to the surface of the barrier layer by a bar coating method, a roll coating method, a gravure coating method, an immersion method or the like, and heating is then performed so that the temperature of the barrier layer is about 70 to about 200°C. The barrier layer may be subjected to a degreasing treatment by an alkali immersion method, an electrolytic cleaning method, an acid cleaning method, an electrolytic acid cleaning method or the like before the barrier layer is subjected to a chemical conversion treatment. When a degreasing treatment is performed as described above, the chemical conversion treatment of the surface of the barrier layer can be further efficiently performed. When an acid degreasing agent with a fluorine-containing compound dissolved in an inorganic acid is used for degreasing treatment, not only a metal foil degreasing effect can be obtained but also a metal fluoride can be formed as a passive state, and in this case, only degreasing treatment may be performed.

### [Heat-sealable resin layer 4]

In the exterior material for electrical storage devices according to the present disclosure, the heat-sealable resin layer 4 is a layer (sealant layer) which corresponds to an innermost layer and performs a function of hermetically sealing the electrical storage device element by heat-sealing the heat-sealable resin layer during construction of the electrical storage device. The heat-sealable resin layer 4 includes a film. The film can function as a sealant film in the heat-sealable resin layer 4.

In the present disclosure, the film has a tensile rupture elongation of 750% or more in an environment of 150°C.

In the present disclosure, since the tensile rupture elongation of the heat-sealable resin layer 4 in an environment at 150°C is set to be equal to or greater than a predetermined value, the heat-sealable resin layer 4 is suitably elongated in application of a load such as tension to the exterior material 10 for electrical storage devices in a high-temperature environment. As a result, it can be considered that the exterior material for electrical storage devices according to the present disclosure can exhibit high sealing strength in a high-temperature environment.

From the viewpoint of more suitably exhibiting the effect of the invention of the present disclosure, the tensile rupture elongation of the film in an environment at - 30°C is preferably 5% or more, more preferably 150% or more, still more preferably 200% or more, and preferably 2,000% or less, more preferably 1,600% or less, still more preferably 500% or less, and is preferably in the range of about 5 to 2,000%, about 5 to 1,600%, about 5 to 500%, about 150 to 2,000%, about 150 to 1,600%, about 150 to 500%, about 200 to 2,000%, about 200 to 1,600%, about 200 to 500%, or the like. The method for measuring the tensile rupture elongation is as described later.

From the viewpoint of more suitably exhibiting the effect of the invention of the present disclosure, the tensile rupture elongation of the film in an environment at 23°C is preferably 5% or more, more preferably 400% or more, still more preferably 500% or more, and preferably 2,000% or less, more preferably 1,600% or less, still more preferably 850% or less, and is preferably in the range of about 5 to 2,000%, about 5 to 1,600%, about 5 to 850%, about 400 to 2,000%, about 400 to 1,600%, about 400 to 850%, about 500 to 2,000%, about 500 to 1,600%, about 500 to 850%, or the like. The method for measuring the tensile rupture elongation is as described later.

From the viewpoint of more suitably exhibiting the effect of the invention of the present disclosure, the tensile rupture elongation of the film in an environment at 120°C is preferably 650% or more, more preferably 700% or more, still more preferably 750% or more, still more preferably 800% or more, and preferably 2,000% or less, more preferably 1,600% or less, and is preferably in the range of about 650 to 2,000%, about 650 to 1,600%, about 700 to 2,000%, about 700 to 1,600%, about 750 to 2,000%, about 750 to 1,600%, about 800 to 2,000%, about 800 to 1,600%, about 850 to 2,000%, about 850 to 1,600%, or the like. The method for measuring the tensile rupture elongation is as described later.

From the viewpoint of more suitably exhibiting the effect of the invention of the present disclosure, the tensile rupture elongation of the film in an environment at 150°C is preferably 800% or more, more preferably 900% or more, and preferably 2,000% or less, more preferably 1,700% or less, still more preferably 1,600% or less, and is preferably in the range of about 750 to 2,000%, about 750 to 1,700%, about 750 to 1,600%, about 850 to 2,000%, about 850 to 1,700%, about 850 to 1,600%, about 900 to 2,000%, about 900 to 1,700%, about 900 to 1,600%, or the like. The method for measuring the tensile rupture elongation is as follows.

### <Measurement of tensile rupture elongation (environment at -30°C, 23°C, 120°C or 150°C)>

The tensile rupture elongation is measured with a tensile tester by a method conforming to JIS K 7127. The test sample width is that of a JIS-K 6251-7-type dumbbell, the gauge length is 15 mm, the tensile speed is 50 mm/min, and the test environment is that at each of -30°C, 23°C, 120°C and 150°C. The measurement is performed three times, and an average value of the three measurements is taken as the tensile rupture elongation.

The tensile rupture elongation of the film is enhanced by, for example, increasing the proportion of a copolymerization component (in particular, a portion that is not a polyester structure A (a polyester structure B, or a soft segment such as a polyether structure)) of a resin forming the film.

From the viewpoint of more suitably exhibiting the effect of the invention of the present disclosure, the indentation elastic modulus of the laminate forming the exterior material from the heat-sealable resin layer 4 side (indentation elastic modulus of the film) is preferably about 0.3 GPa or more, more preferably about 0.4 GPa or more, still more preferably about 0.5 GPa or more. From the same viewpoint, the indentation elastic modulus of the film is preferably about 5 GPa or less, more preferably about 4 GPa or less, still more preferably about 3 GPa or less, still more preferably about 2 GPa or less, still more preferably 1.5 GPa or less. The indentation elastic modulus of the film is preferably in the range of about 0.3 to 5 GPa, about 0.3 to 4 GPa, about 0.3 to 3 GPa, about 0.3 to 2 GPa, about 0.3 to 1.5 GPa, about 0.4 to 5 GPa, about 0.4 to 4 GPa, about 0.4 to 3 GPa, about 0.4 to 2 GPa, about 0.4 to 1.5 GPa, about 0.5 to 5 GPa, about 0.5 to 4 GPa, about 0.5 to 3 GPa, about 0.5 to 2 GPa, or about 0.5 to 1.5 GPa. The method for measuring the indentation elastic modulus is as follows.

### [Measurement of indentation elastic modulus]

The indentation elastic modulus is measured in conformation to ISO 14577: 2015, where a method is used in which the indentation elastic modulus is measured on a surface of the laminate on the heat-sealed resin layer side in an environment at about 23°C and about 60% RH using a load ultra-microhardness tester equipped with a Vickers indenter (quadrilateral diamond indenter with a facing angle of 136 °). The measurement is performed with an indentation speed of 0.1 µm/sec, a depth of indentation of 2 µm, a holding time of 5 seconds and a drawing speed of 0.1 µm/sec. The load ultra-microhardness tester is preferably PICODENTOR HM 500 (manufactured by FISCHER INSTRUMENTS K.K.). At least five samples are measured, and the average of the measured values is taken as a value of the indentation elastic modulus under the conditions. It is desirable to use a suction board or an instantaneous adhesive for fixing the sample. When the indentation elastic modulus of the film alone is measured, the measurement is performed on the central portion of a main surface of the film.

From the viewpoint of more suitably exhibiting the effect of the invention of the present disclosure, the melting peak temperature of the film is preferably 170°C or higher, more preferably 190°C or higher, still more preferably 200°C or higher, and preferably 350°C or lower, more preferably 300°C or lower, still more preferably 270°C or lower, still more preferably 217°C, and is preferably in the range of about 170 to 350°C, about 170 to 300°C, about 170 to 270°C, about 170 to 217°C, about 190 to 350°C, about 190 to 300°C, about 190 to 270°C, about 190 to 217°C, about 200 to 350°C, about 200 to 300°C, about 200 to 270°C, about 200 to 217°C, or the like. The method for measuring the melting peak temperature is as follows.

### <Measurement of melting peak temperature>

For the resin forming the film, the melting peak temperature is measured in accordance with the provisions of JIS K 7121: 2012 (Testing Methods for Transition Temperatures of Plastics (Amendment 1 of JIS K 7121: 1987)). The measurement is performed with a differential scanning calorimeter (DSC, Differential Scanning Calorimeter Q200 manufactured by TA Instruments). The measurement sample is held at -50°C for 15 minutes, then heated from -50°C to 300°C at a temperature rise rate of 10°C/min to measure the first melting peak temperature P (°C), and then held at 300°C for 2 minutes. Next, the measurement sample is cooled from 300°C to -50°C at a temperature lowering rate of 10°C/min, and held for 15 minutes. Further, the second melting peak temperature Q (°C) is measured by heating the measurement sample from -50°C to 300°C at a temperature rise rate of 10°C/min. The flow rate of the nitrogen gas is set to 50 ml/min. In accordance with the above procedure, the first measured melting peak temperature P (°C) and the second measured melting peak temperature Q (°C) are determined, and the first measured melting peak temperature P is adopted as a melting peak temperature.

From the viewpoint of more suitably exhibiting the effect of the invention of the present disclosure, the glass transition temperature (Tg) of the film is preferably 67°C or lower, preferably 60°C or lower, still more preferably 50°C or lower, and preferably 0°C or higher, more preferably 10°C or higher, and is preferably in the range of about 0 to 67 °C, about 0 to 60 °C, about 0 to 50 °C, about 10 to 67 °C, about 10 to 60 °C, about 10 to 50 °C, or the like. The glass transition temperature (Tg) is measured by dynamic mechanical analysis (DMA). Specifically, the glass transition temperature of a resin forming the film is measured by dynamic mechanical analysis (DMA). The measurement is performed using a commercially available apparatus. A film cut into 5 mm in width and 20 mm in length is set in chucks with the chuck-to-chuck distance being 10 mm. For the measurement conditions, the temperature is elevated from -30°C to 250°C at a temperature elevation rate of 5°C/min, the frequency is 10 Hz, the static load is 70 g, and the strain is 5 µm. The temperature at a peak of a loss sine (tan δ) obtained by dividing a loss elastic modulus by a storage elastic modulus is taken as a glass transition temperature. When multiple layers containing different resins form the heat-sealable resin layer, the barrier layer and the heat-sealable resin layer are separated from each other, and the glass transition temperature (Tg) of the heat-sealable resin layer is measured to obtain a peak value of tan δ for each resin. For each layer contained in the heat-sealable resin layer, separately, the type of resin contained in each layer which is identified from an infrared absorption spectrum or the like can be associated with the glass transition temperature (Tg) of the layer.

The glass transition temperature (Tg) of the film can be lowered by, for example, increasing the proportion of a copolymerization component (in particular, a portion that is not a polyester structure A (a polyester structure B, or a soft segment such as a polyether structure)) of a resin forming the film.

In the present disclosure, it is preferable that the film is formed of a resin containing three or more types of constituent units. Here, the constituent unit of a resin means a structural unit forming the resin, and for example, if the resin is a copolymer, at least two types of monomer units are the constituent units of the resin (units of two or more structures introduced into the resin by polymerization). For example, in the present disclosure, it is preferable that the resin forming the film contains a polyester structure A as described later. The polyester structure A is a structure with an ester bond formed by dehydration condensation of a polyvalent carboxylic acid (monomer) and a polyol (monomer), and contains two types of constituent units (monomer units): a structure derived from a polyvalent carboxylic acid (monomer unit (also referred to as a repeating unit)) and a structure derived from a polyol (monomer unit (also referred to as a repeating unit)). The upper limit of the number of types of constituent units of the resin forming the film is not particularly limited, and is, for example, about 6.

In the present disclosure, the constituent unit of the resin is typically a monomer unit contained in the copolymer. However, the constituent unit of the resin is not limited to monomer units forming a main chain of a copolymer, and conceptually includes monomer units forming a side chain (for example, monomer units introduced by graft polymerization or the like), and monomer units forming a crosslinked structure between main chains (units derived from crosslinkable monomers).

As described above, a laminate film heretofore used for a heat-sealable resin layer of an exterior material in an electrolytic solution lithium ion battery containing an organic solvent is formed by a polypropylene film or the like, and has significantly reduced durability (sealing strength) in an environment at a high temperature of 100°C or higher. For example, a polypropylene film is generally formed of a copolymer of propylene and ethylene as constituent units, and has a melting peak temperature of higher than 170°C.

From the viewpoint of more suitably exhibiting the effect of the invention of the present disclosure, it is preferable that the resin forming the film contains the polyester structure A. The polyester structure A is obtained by condensation polymerization of an acid component and a polyol component. The acid component is selected from phthalic acid, terephthalic acid, isophthalic acid, naphthalenedicarboxylic acid, cyclohexanedicarboxylic acid, adipic acid, sebacic acid and the like. The polyol component is selected from ethylene glycol, butanediol, pentanediol, hexanediol, neopentyl glycol, diethylene glycol, polytetramethylene glycol, cyclohexanedimethanol, propanediol and the like. The polyester structure A is more preferably a polybutylene terephthalate structure. The polybutylene terephthalate structure is a structure formed by polymerizing terephthalic acid and 1,4-butanediol, and contains two types of constituent units: a structure derived from terephthalic acid and a structure derived from 1,4-butanediol.

Further, from the viewpoint of more suitably exhibiting the effect of the invention of the present disclosure, it is more preferable that the resin forming the film contains at least one selected from the group consisting of a polyether structure and a polyester structure B, in addition to the polyester structure A. The polyester structure B is a polyester structure different from the polyester structure A.

The polyether structure can be introduced into a resin by carrying out a polycondensation reaction of a polycarboxylic acid of the polyester structure A (for example, terephthalic acid in the case of a polybutylene terephthalate structure) and a compound having a polyether structure (monomer). It is desirable that the polyether structure form a soft segment of the resin in the film, and examples of the compound (monomer) that forms such a soft segment by undergoing a polycondensation reaction with a polyvalent carboxylic acid of the polyester structure A include diols capable of exhibiting elasticity, such as polytetramethylene ether glycol and neopentyl glycol. The polyether structure is preferably a polyether structure derived from at least one selected from the group consisting of polytetramethylene ether glycol and neopentyl glycol. Polytetramethylene ether glycol, neopentyl glycol and the like form constitutional units in the polyether structure of the resin. When a polyether structure is introduced into a resin as a soft segment, the rubber elasticity of the resin is enhanced, and thus the resin is hardly broken, so that high sealing strength is suitably exhibited in environments in a wide temperature range from a low temperature to a high temperature.

The polyester structure B can be introduced into a resin by using a compound (monomer) that forms a polyester structure by undergoing a polycondensation reaction with a polyol used in the polyester structure A, such as ethylene glycol, butanediol, pentanediol, hexanediol, neopentyl glycol, diethylene glycol, polytetramethylene glycol, cyclohexanedimethanol or propanediol. It is desirable that the polyester structure B form a soft segment of a resin in the film, and examples of the compound (monomer) that forms such a soft segment by undergoing a polycondensation reaction with a polyol of the polyester structure A include dicarboxylic acids such as aromatic dicarboxylic acids such as phthalic acid, terephthalic acid, isophthalic acid and naphthalenedicarboxylic acid, and aliphatic dicarboxylic acids such as aliphatic dicarboxylic acids such as adipic acid, sebacic acid, dodecanedionic acid and cyclohexanedicarboxylic acid (preferably aliphatic dicarboxylic acids having 4 to 20 carbon atoms). An aromatic dicarboxylic acid, an aliphatic dicarboxylic acid, or the like forms a constituent unit in the polyester structure B of the resin. The polyester structure B is particularly preferably a polyester structure obtained by polycondensation of a polyol and at least one dicarboxylic acid selected from the group consisting of isophthalic acid, sebacic acid and dodecanedionic acid. When the polyester structure B is introduced into a resin as a soft segment, the rubber elasticity of the resin is enhanced, and thus the resin is hardly broken, so that high sealing strength is suitably exhibited in environments in a wide temperature range from a low temperature to a high temperature.

From the viewpoint of more suitably exhibiting the effect of the invention of the present disclosure, it is particularly preferable that the resin forming the film contains a polyether structure in addition to the polybutylene terephthalate structure, and the polyether structure has a polycondensation structure of at least one of polytetramethylene ether glycol and neopentyl glycol and terephthalic acid of the polybutylene terephthalate structure. In addition, it is particularly preferable that the resin forming the film contains the polyester structure B in addition to the polybutylene terephthalate structure, and the polyester structure B has a polycondensation structure of at least one selected from the group consisting of isophthalic acid, dodecanedionic acid and sebacic acid and 1,4-butanediol of the polybutylene terephthalate structure.

From the viewpoint of more suitably exhibiting the effect of the invention of the present disclosure, it is preferable that the resin forming the film contains the polyester structure A as a main component, and it is more preferable that the resin forming the film contains the polybutylene terephthalate structure as a main component. The main component means that the proportion of the component is 50 mol% or more, preferably 60 mol% or more, more preferably 70 mol% or more, still more preferably 80 mol% or more when the proportion of all components forming the resin is 100 mol%. In the resin forming the sealant film, the proportion of at least one of the polyether structure and the dicarboxylic acid structure is preferably about 2 to 30 mol%, more preferably about 3 to 25 mol%, still more preferably about 3 to 20 mol% when the proportion of all components (all monomer units) forming the resin is 100 mol%.

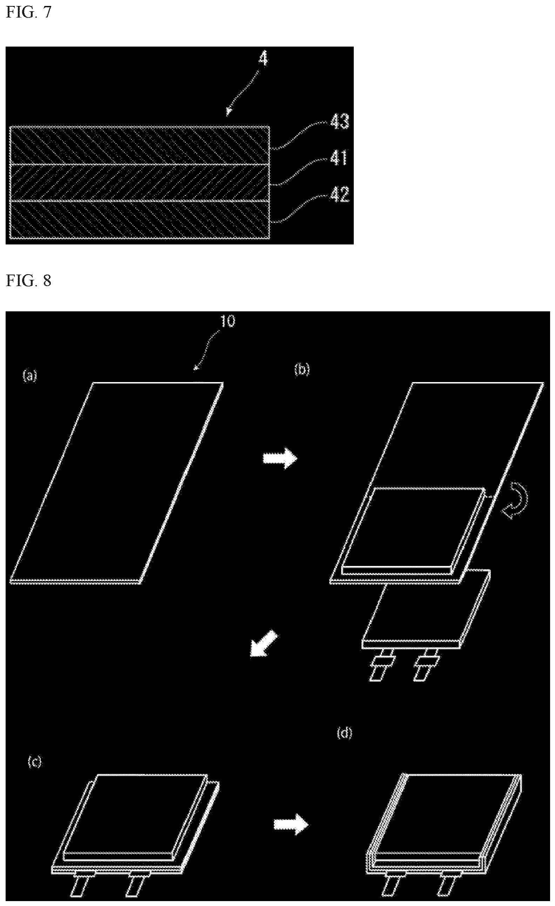

The heat-sealable resin layer 4 may be a single layer as shown in, for example, Fig. 5, or may have two or more layers as shown in, for example, Figs. 6 and 7. Fig. 6 shows the heat-sealable resin layer 4 including a laminate in which a first layer 41 on the barrier layer 3 side and a second layer 42 on the innermost layer side are laminated, and Fig. 7 shows the heat-sealable resin layer 4 including a laminate in which a third layer 43 on the barrier layer side, the first layer 41 located in the middle, and the second layer 42 on the innermost layer side are laminated in this order.

When the heat-sealable resin layer 4 has two or more layers, it is preferable that at least one of the two or more layers is the film of the present disclosure (that is, the tensile rupture elongation in an environment at 150°C is 750% or more). When the heat-sealable resin layer 4 has two or more layers, it is preferable that a surface of the heat-sealable resin layer 4 on a side opposite to the barrier layer 3 (that is, a surface of the innermost layer of the exterior material 10 for electrical storage devices) is formed of the film of the present disclosure. In Figs. 6 and 7, it is preferable that at least the second layer 42 is the film of the present disclosure. When the heat-sealable resin layer 4 has two or more layers, it is preferable that all the layers are formed of the film of the present disclosure. When multiple layers containing different resins form the heat-sealable resin layer, the layers can be separated, followed by measurement of the melting peak temperature of each layer.

The heat-sealable resin layer 4 may contain a slipping agent etc. if necessary. When the heat-sealable resin layer 4 contains a slipping agent, the moldability of the exterior material for electrical storage devices can be improved. The slipping agent is not particularly limited, and a known slipping agent can be used. The slipping agents may be used alone, or may be used in combination of two or more thereof.

The slipping agent is not particularly limited, and is preferably an amide-based slipping agent. Specific examples of the slipping agent include those exemplified for the base material layer 1. The slipping agents may be used alone, or may be used in combination of two or more thereof.

In the present disclosure, it is preferable that a slipping agent is present on the surface of the heat-sealable resin layer 4 and/or inside the heat-sealable resin layer 4 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The slipping agents may be used alone, or may be used in combination of two or more thereof, and are preferably used in combination of two or more thereof.

When the slipping agent is present on the surface of the heat-sealable resin layer 4, the amount of the slipping agent present is not particularly limited. From the viewpoint of improving the moldability of the exterior material for electrical storage devices, the amount of the slipping agent present is preferably about 1 mg/m² or more, more preferably about 3 mg/m² or more, still more preferably about 5 mg/m² or more, still more preferably about 10 mg/m² or more, still more preferably about 15 mg/m² or more, and preferably about 50 mg/m² or less, more preferably about 40 mg/m² or less, and is preferably in the range of 1 to 50 mg/m², about 1 to 40 mg/m², about 3 to 50 mg/m², about 3 to 40 mg/m², about 5 to 50 mg/m², about 5 to 40 mg/m², about 10 to 50 mg/m², about 10 to 40 mg/m², about 15 to 50 mg/m², or about 15 to 40mg/m².

When the slipping agent is present inside the heat-sealable resin layer 4, the amount of the slipping agent present is not particularly limited. From the viewpoint of improving the moldability of the exterior material for electrical storage devices, the amount of the slipping agent present is preferably about 100 ppm or more, more preferably about 300 ppm or more, still more preferably about 500 ppm or more, and preferably about 3,000 ppm or less, more preferably about 2,000 ppm or less, and is preferably in the range of about 100 to 3,000 ppm, about 100 to 2,000 ppm, about 300 to 3,000 ppm, about 300 to 2,000 ppm, about 500 to 3,000 ppm, or about 500 to 2,000 ppm. When two or more slipping agents are present inside the heat-sealable resin layer 4, the above-described slipping agent amount is the total amount of the slipping agents. In addition, when two or more types of slipping agents are present inside the heat-sealable resin layer 4, the amount of the first type of slipping agent present is not particularly limited. From the viewpoint of improving the moldability of the exterior material for electrical storage devices, the amount of the first type of slipping agent present is preferably about 100 ppm or more, more preferably about 300 ppm or more, still more preferably about 500 ppm or more, and preferably about 3,000 ppm or less, more preferably about 2,000 ppm or less, and is preferably in the range of about 100 to 3,000 ppm, about 100 to 2,000 ppm, about 300 to 3,000 ppm, about 300 to 2,000 ppm, about 500 to 3,000 ppm, or about 500 to 2,000 ppm. The amount of the second type of slipping agent present is not particularly limited. From the viewpoint of improving the moldability of the exterior material for electrical storage devices, the amount of the slipping agent present is preferably about 50 ppm or more, more preferably about 100 ppm or more, still more preferably about 200 ppm or more, and preferably about 1,500 ppm or less, more preferably about 1,000 ppm or less, and is preferably in the range of about 50 to 1,500 ppm, about 50 to 1,000 ppm, about 100 to 1,500 ppm, about 100 to 1,000 ppm, about 200 to 1,500 ppm, or about 200 to 1,000 ppm.

The slipping agent present on the surface of the heat-sealable resin layer 4 may be one obtained by exuding the slipping agent contained in the resin forming the heat-sealable resin layer 4, or one obtained by applying a slipping agent to the surface of the heat-sealable resin layer 4.

The thickness of the heat-sealable resin layer 4 is not particularly limited as long as the heat-sealable resin layers are heat-sealed to each other to perform a function of sealing the electrical storage device element, and the thickness is, for example, about 100 µm or less, preferably about 85 µm or less, more preferably about 15 to 85 µm. For example, when the thickness of the adhesive layer 5 described later is 10 µm or more, the thickness of the heat-sealable resin layer 4 is preferably about 85 µm or less, more preferably about 15 to 45 µm. For example, when the thickness of the adhesive layer 5 described later is less than 10 µm or the adhesive layer 5 is not provided, the thickness of the heat-sealable resin layer 4 is preferably about 20 µm or more, more preferably about 35 to 85 µm.

### (Method for manufacturing film)

The method for manufacturing a film to be incorporated in the heat-sealable resin layer 4 is not particularly limited as long as the film of the present disclosure is obtained, and a known or conventional film formation method and lamination method may be applied. The film can be manufactured by, for example, a known film formation method and/or lamination method such as an extrusion method, a coextrusion method, a cast molding method, a T-die method, a cutting method or an inflation method. When the film to be incorporated in the heat-sealable resin layer 4 has two or more layers, for example, films for forming the layers, which are produced in advance, may be laminated with an adhesive agent layer interposed therebetween, a molten resin composition may be laminated by an extrusion or co-extrusion method on a layer formed in advance, a plurality of layers may be laminated by melting and press-bonding while being produced in parallel, or one or more resins may be applied onto another layer, and dried to perform coating.

For the heat-sealable resin layer 4 including the film, layers to be incorporated in the heat-sealable resin layer 4 can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a water absorbing layer (or a sulfur-based gas absorbing layer), which is formed in advance, may be laminated and bonded with an adhesive layer laminated by an extrusion coating method, a dry lamination method, a non-solvent lamination method or the like. Subsequently, aging treatment may be performed if necessary.

For example, when a film or the like is laminated by an extrusion coating method, first, a resin for forming the film is heated and melted, expanded and stretched in a necessary width direction by a T-die, and (co-)extruded into a curtain shape, and the molten resin is caused to flow down to a lamination surface, and sandwiched between a rubber roll and a cooled metal roll. In this way, the layer can be formed and laminated and bonded to the lamination surface in parallel. The melt mass flow rate (MFR) of each resin component in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K 7210.

The melt mass flow rate (MFR) of the resin component in the case of use of an inflation method is preferably 0.2 to 10 g/10 min, more preferably 0.2 to 9.5 g/10 min. If MFR is below or above the above-described range, processability is likely to be compromised.

When the heat-sealable resin layer 4 has two or more layers, the surface of each layer between the layers forming the heat-sealable resin layer 4 including the film can be subjected to desired surface treatment in advance for improving bondability if necessary. For example, a corona treatment layer, an ozone treatment layer, a plasma treatment layer, an oxidation treatment layer, and the like can be formed and provided by performing any of pretreatments such as corona discharge treatment, ozone treatment, low-temperature plasma treatment using oxygen gas, nitrogen gas or the like, glow discharge treatment, and oxidation treatment using a chemical or the like. Alternatively, any of various coating agent layers such as a primer coating agent layer, an undercoat agent layer, an anchor coating agent layer, an adhesive agent layer and a vapor deposition anchor coating agent layer may be formed on the surface as a surface treatment layer. For the various coating agent layers described above, for example, a resin composition containing a polyester-based resin, a polyamide-based resin, a polyurethane-based resin, an epoxy-based resin, a phenol-based resin, a (meth)acryl-based resin, a polyvinyl acetate-based resin, a polyolefin-based resin such as polyethylene or polypropylene or a copolymer or a modified resin thereof, a cellulose-based resin or the like as a vehicle main component can be used.

Each layer to be incorporated in the heat-sealable resin layer 4 can be further uniaxially stretched or biaxially stretched by a heretofore known method using a tenter method, a tubular method or the like if necessary.

### [Adhesive layer 5]

In the exterior material for electrical storage devices according to the present disclosure, the adhesive layer 5 is a layer provided between the barrier layer 3 (or corrosion-resistant film) and the heat-sealable resin layer 4 if necessary for firmly bonding these layers to each other.

The adhesive layer 5 is formed from a resin capable of bonding the barrier layer 3 and the heat-sealable resin layer 4 to each other. The resin to be used for forming the adhesive layer 5 is, for example, the same as that of the adhesive exemplified for the adhesive agent layer 2.

From the viewpoint of further improving adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group. Whether the adhesive layer 5 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 3 and the adhesive layer 5. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2,000, more preferably about 100 to 1,000, still more preferably about 200 to 800. In the present invention, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F-type glycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The polyurethane is not particularly limited, and a known polyurethane can be used. The adhesive layer 5 may be, for example, a cured product of two-liquid curable polyurethane.

The proportion of the polyurethane in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5 in an atmosphere including a component which induces corrosion of the barrier layer, such as an electrolytic solution.

When the adhesive layer 5 is a cured product of a resin composition containing at least one selected from the group consisting of a compound having an isocyanate group, a compound having an oxazoline group and an epoxy resin, and the acid-modified polyolefin, the acid-modified polyolefin functions as a main component, and the compound having an isocyanate group, the compound having an oxazoline group, and the compound having an epoxy group each function as a curing agent.

The adhesive layer 5 may contain a modifier having a carbodiimide group.

It is also preferable that the adhesive layer 5 is formed from a cured product of a resin composition containing at least one of polyester and polycarbonate and at least one of an alicyclic isocyanate compound and an aromatic isocyanate compound.

The polyester is preferably polyester polyol. The polyester polyol is not particularly limited as long as it has an ester bond in the polymer main chain and a plurality of hydroxyl groups at the terminal or the side chain. The polycarbonate is preferably polycarbonate polyol. The polyester polyol is not particularly limited as long as it has a carbonate bond in the polymer main chain and a plurality of hydroxyl groups at the terminal or the side chain. One type or two or more types of each of the polyester and the polycarbonate may be contained in the resin composition forming the adhesive layer 5.

The alicyclic isocyanate compound is not particularly limited as long as it is a compound having an alicyclic structure and an isocyanate group. It is preferable that the alicyclic isocyanate compound has two or more isocyanate groups. Specific examples of the alicyclic isocyanate compound include isophorone diisocyanate (IPDI) etc., polymerized or nurated products thereof, mixtures thereof, and copolymers of these compounds with other polymers. Examples thereof include adduct forms, biuret forms, and isocyanurate forms. One type or two or more types of the alicyclic isocyanate compound may be contained in the resin composition forming the adhesive layer 5.

The alicyclic isocyanate compound is not particularly limited as long as it is a compound having an aromatic ring and an isocyanate group. It is preferable that the aromatic isocyanate compound has two or more isocyanate groups. Specific examples of the aromatic isocyanate compound include tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms. One type or two or more types of the aromatic isocyanate compound may be contained in the resin composition forming the adhesive layer 5.

When the resin composition that forms the adhesive layer 5 contains at least one of an alicyclic isocyanate compound and an aromatic isocyanate compound, for example, the resin composition may contain an alicyclic isocyanate compound while being free of an aromatic isocyanate compound, or for example, the resin composition may contain an aromatic isocyanate compound while being free of an alicyclic isocyanate compound, or for example, the resin composition may contain both an alicyclic isocyanate compound and an aromatic isocyanate compound.

The content of each of the alicyclic isocyanate compound and the aromatic isocyanate compound in the adhesive layer 5 is preferably in the range of 0.1 to 50 mass%, more preferably in the range of 0.5 to 40 mass% in the resin composition forming the adhesive layer 5. When the adhesive layer 5 contains both the alicyclic isocyanate compound and the aromatic isocyanate compound, the total content thereof is preferably in the range of 0.1 to 50 mass%, more preferably in the range of 0.5 to 40 mass% in the resin composition forming the adhesive layer 5.

The thickness of the adhesive layer 5 is preferably about 50 µm or less, about 40 µm or less, about 30 µm or less, about 20 µm or less, or about 5 µm or less. The thickness of the adhesive layer 5 is preferably about 0.1 µm or more, or about 0.5 µm or more. The thickness of the adhesive layer 5 is preferably in the range of about 0.1 to 50 µm, about 0.1 to 40 µm, about 0.1 to 30 µm, about 0.1 to 20 µm, about 0.1 to 5 µm, about 0.5 to 50 µm, about 0.5 to 40 µm, about 0.5 to 30 µm, about 0.5 to 20 µm, or about 0.5 to 5 µm. More specifically, the thickness is preferably about 1 to 10 µm, more preferably about 1 to 5 µm in the case of the adhesive exemplified for the adhesive agent layer 2. When the adhesive layer 5 is a cured product of a resin composition containing the adhesive exemplified for the adhesive agent layer 2, the adhesive layer 5 can be formed by, for example, applying the resin composition and curing the resin composition by heating or the like.

### [Surface Coating Layer 6]

The exterior material for electrical storage devices according to the present disclosure may include a surface coating layer 6 on the base material layer 1 (on a side opposite to the barrier layer 3 from the base material layer 1) if necessary for the purpose of improving at least one of designability, electrolytic solution resistance, scratch resistance, moldability and the like. The surface coating layer 6 is a layer located on the outermost layer side of the exterior material for electrical storage devices when the power storage device is constructed using the exterior material for electrical storage devices.

Examples of the resin for forming the surface coating layer 6 include resins such as polyvinylidene chloride, polyester, polyamide, epoxy resin, acrylic resin, fluororesin, polyurethane, silicone resin and phenol resin, and modified products of these resins. The resin may be a copolymer of these resins or a modified product of the copolymer. Further, a mixture of these resins may be used. The resin is preferably a curable resin. That is, it is preferable that the surface coating layer 6 includes a cured product of a resin composition containing a curable resin.

When the resin forming the surface coating layer 6 is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a first component containing a polyol compound and a second component containing an isocyanate compound. The polyurethane is preferably a two-liquid curable polyurethane adhesive having polyol such as polyester polyol, polyether polyol or acrylic polyol as a first component, and aromatic or aliphatic polyisocyanate as a second component. Examples of the polyurethane include polyurethane containing an isocyanate compound and a polyurethane compound obtained by reacting a polyol compound with an isocyanate compound in advance. Examples of the polyurethane include polyurethane containing a polyurethane compound and a polyurethane compound obtained by reacting a polyol compound with an isocyanate compound in advance. Examples of the polyurethane include polyurethane obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H 12 MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates can be mentioned. It is also possible to use a multimer (e.g. a trimer) as the polyisocyanate compound. Examples of the multimer include adducts, biurets, and nurates. The aliphatic isocyanate-based compound is an isocyanate having an aliphatic group and having no aromatic ring, the alicyclic isocyanate-based compound is an isocyanate having an alicyclic hydrocarbon group, and the aromatic isocyanate-based compound is an isocyanate having an aromatic ring. Since the surface coating layer 6 is formed of polyurethane, excellent electrolytic solution resistance is imparted to the exterior material for electrical storage devices.

If necessary, the surface coating layer 6 may contain additives such as the slipping agent, an anti-blocking agent, a matting agent, a flame retardant, an antioxidant, a tackifier and an anti-static agent on at least one of the surface and the inside of the surface coating layer 6 according to the functionality and the like to be imparted to the surface coating layer 6 and the surface thereof. The additives are in the form of, for example, fine particles having an average particle diameter of about 0.5 nm to 5 µm. The average particle diameter of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

The method for forming the surface coating layer 6 is not particularly limited, and examples thereof include a method in which a resin for forming the surface coating layer 6 is applied. When the additive is added to the surface coating layer 6, a resin mixed with the additive may be applied.

The thickness of the surface coating layer 6 is not particularly limited as long as the above-mentioned function as the surface coating layer 6 is performed, and it is, for example, about 0.5 to 10 µm, preferably about 1 to 5 µm.

### 3. Method for Manufacturing Exterior Material for Electrical Storage Devices

The method for producing an exterior material for electrical storage devices is not particularly limited as long as a laminate is obtained in which the layers of the exterior material for electrical storage devices according to the present invention are laminated. Examples thereof include a method including the step of laminating at least the base material layer 1, the barrier layer 3 and the heat-sealable resin layer 4 in this order.

An example of the method for manufacturing the exterior material for electrical storage devices of the present invention is as follows. First, a laminate including the base material layer 1, the adhesive agent layer 2 and the barrier layer 3 in this order (hereinafter, the laminate may be described as a "laminate A") is formed. Specifically, the laminate A can be formed by a dry lamination method in which an adhesive to be used for formation of the adhesive agent layer 2 is applied onto the base material layer 1 or the barrier layer 3, the surface of which is subjected to a chemical conversion treatment if necessary, using a coating method such as a gravure coating method or a roll coating method, and dried, the barrier layer 3 or the base material layer 1 is then laminated, and the adhesive agent layer 2 is cured.

Then, the heat-sealable resin layer 4 is laminated on the barrier layer 3 of the laminate A. When the heat-sealable resin layer 4 is laminated directly on the barrier layer 3, the heat-sealable resin layer 4 may be laminated onto the barrier layer 3 of the laminate A by a method such as a thermal lamination method or an extrusion lamination method. When the adhesive layer 5 is provided between the barrier layer 3 and the heat-sealable resin layer 4, the adhesive layer 5 and the heat-sealable resin layer 4 can be laminated by, for example, (1) an extrusion lamination method, (2) a thermal lamination method, (3) a sandwich lamination method, or (4) a dry lamination method. Examples of the (1) extrusion lamination method include a method in which the adhesive layer 5 and the heat-sealable resin layer 4 are extruded onto the barrier layer 3 of the laminate A to perform lamination (coextrusion lamination method or tandem lamination method). Examples of the (2) thermal lamination method include a method in which separately, a laminate in which the adhesive layer 5 and the heat-sealable resin layer 4 are laminated is formed, and laminated on the barrier layer 3 of the laminate A, and a method in which a laminate in which the adhesive layer 5 is laminated on the barrier layer 3 of the laminate A is formed, and laminated to the heat-sealable resin layer 4. Examples of the (3) sandwich lamination method include a method in which the laminate A and the heat-sealable resin layer 4 are bonded to each other with the adhesive layer 5 interposed therebetween while the melted adhesive layer 5 is poured between the barrier layer 3 of the laminate A and the heat-sealable resin layer 4 formed in a sheet shape in advance. Examples of the (4) dry lamination method include a method in which an adhesive for forming the adhesive layer 5 is laminated on the barrier layer 3 of the laminate A by, for example, a method in which the adhesive is applied by solution coating and dried, or a method in which the applied adhesive is further baked, and on the thus-obtained adhesive layer 5, the heat-sealable resin layer 4 formed in a sheet shape in advance is laminated.

When the surface coating layer 6 is provided, the surface coating layer 6 is laminated on a surface of the base material layer 1 on a side opposite to the barrier layer 3. The surface coating layer 6 can be formed by, for example, coating a surface of the base material layer 1 with the resin that forms the surface coating layer 6. The order of the step of laminating the barrier layer 3 on a surface of the base material layer 1 and the step of laminating the surface coating layer 6 on a surface of the base material layer 1 is not particularly limited. For example, the surface coating layer 6 may be formed on a surface of the base material layer 1, followed by forming the barrier layer 3 on a surface of the base material layer 1 on a side opposite to the surface coating layer 6.

As described above, a laminate including the surface coating layer 6 provided if necessary, the base material layer 1, the adhesive agent layer 2 provided if necessary, the barrier layer 3, the adhesive layer 5 provided if necessary, and the heat-sealable resin layer 4 in this order is formed, and the laminate may be further subjected to a heating treatment for strengthening the bondability of the adhesive agent layer 2 and the adhesive layer 5 provided if necessary.

In the exterior material for electrical storage devices, the layers forming the laminate may be subjected to surface activation treatment such as corona treatment, blast treatment, oxidation treatment or ozone treatment if necessary to improve processing suitability. For example, by subjecting a surface of the base material layer 1, which is opposite to the barrier layer 3, to a corona treatment, the ink printability of the surface of the base material layer 1 can be improved.

### 4. Uses of Exterior Material for Electrical Storage Devices

The exterior material for electrical storage devices according to the present disclosure is used as a packaging for hermetically sealing and storing electrical storage device elements such as a positive electrode, a negative electrode, and an electrolyte. That is, in a packaging formed of the exterior material for electrical storage devices of the present disclosure, an electrical storage device element including at least a positive electrode, a negative electrode, and an electrolyte can be housed to obtain an electrical storage device.

Specifically, an electrical storage device element including at least a positive electrode, a negative electrode, and an electrolyte is covered with the exterior material for electrical storage devices according to the present disclosure such that a flange portion (region where a heat-sealable resin layer is in contact with itself) can be formed on the periphery of the electrical storage device element while a metal terminal connected to each of the positive electrode and the negative electrode protrudes to the outside, and the heat-sealable resin layer at the flange portion is heat-sealed with itself, thereby providing an electrical storage device using the exterior material for electrical storage devices. When the electrical storage device element is housed in the packaging formed of the exterior material for electrical storage devices according to the present disclosure, the packaging is formed in such a manner that the heat-sealable resin portion of the exterior material for electrical storage devices according to the present disclosure is on the inner side (a surface contacting the electrical storage device element). The heat-sealable resin layers of two exterior materials for electrical storage devices may be superposed in such a manner as to face each other, followed by heat-sealing the peripheral edge portions of the superposed exterior materials for electrical storage devices to form a packaging. Alternatively, as in the example shown in Fig. 8, one exterior material for electrical storage devices may be folded over itself, followed by heat-sealing the peripheral edge portions to form a packaging. When the exterior material is folded over itself, a packaging may be formed by three-side sealing with the exterior material heat-sealed at sides other than the folding side as in the example shown in Fig. 8, or may be subjected to four-side sealing with the exterior material folded in such a manner that a flange portion can be formed, or a heat-sealed portion may be formed by winding the exterior material for electrical storage devices around the circumference of the electrical storage device element, and sealing the heat-sealable resin layers to each other, followed by disposition of a lid or the like such that the openings at both ends are each closed. In the exterior material for electrical storage devices, a concave portion for housing an electrical storage device element may be formed by deep drawing molding or bulging molding. As in the example shown in Fig. 8, one exterior material for electrical storage devices may be provided with a concave portion while the other exterior material for electrical storage devices is not provided a concave portion, or the other exterior material for electrical storage devices may also be provided with a concave portion.

The exterior material for electrical storage devices according to the present disclosure can be suitably used for electrical storage devices such as batteries (including condensers, capacitors and the like). The exterior material for electrical storage devices according to the present disclosure may be used for either primary batteries or secondary batteries, and is preferably used for secondary batteries. The type of secondary battery to which the exterior material for electrical storage devices according to the present disclosure is applied is not particularly limited, and examples thereof include lithium ion batteries, lithium ion polymer batteries, all-solid-state batteries, semi-solid-state batteries, pseudo-solid-state batteries, polymer batteries, all polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. The exterior material for electrical storage devices according to the present disclosure is suitably applied to lithium ion batteries, lithium ion polymer batteries and all-solid-state batteries, among the batteries mentioned above, and is particularly suitably used for all-solid-state batteries.

### EXAMPLES

Hereinafter, the present disclosure will be described in detail by way of examples and comparative examples. However, the present disclosure is not limited to examples.

### <Manufacturing of film>

### (Examples 1 to 5 and Comparative Examples 1 and 2)

In each of resins used for forming a film of a heat-sealable resin layer in Examples 1 and 2, terephthalic acid and 1,4-butanediol forming a polybutylene terephthalate structure that is a main component form two constituent units, and a polyether structure as an accessary component is block-polymerized with the polybutylene terephthalate structure. The polyether structure is a structure which is introduced into the resin by copolymerization of polytetramethylene ether glycol as a third type of constituent unit with the terephthalic acid. Therefore, the resin for forming the film contains a polybutylene terephthalate structure (terephthalic acid and 1,4-butanediol as monomer units are two types of constituent units) and a polyether structure (polytetramethylene ether glycol as a monomer unit is one type of constituent unit), and has a structure in which a total of three types of constituent units are copolymerized. The resins for forming the film of the heat-sealable resin layer in Examples 1 and 2 each contain terephthalic acid, 1,4-butanediol and polytetramethylene glycol as monomer units at a ratio (terephthalic acid residue : 1,4-butanediol residue : polytetramethylene glycol residue) of 100 : 95 : 5 on a molar basis. The difference between Examples 1 and 2 is a difference in the ratio of polytetramethylene ether glycol, which is higher in Example 1.

In each of resins used for forming a film of a heat-sealable resin layer in Examples 3 and 4, a polyester structure B, instead of the polyether structure in Examples 1 and 2, is block-polymerized with the polybutylene terephthalate structure. The polyester structure B is a structure which is introduced into the resin by copolymerization of dodecanedioic acid (dodecane diacid) as a third type of constituent unit with the 1,4-butanediol. Therefore, the resin for forming the film contains a polybutylene terephthalate structure (terephthalic acid and 1,4-butanediol as monomer units are two types of constituent units) and the polyester structure B (dodecanedionic acid as a monomer unit is one type of constituent unit), and has a structure in which a total of three types of constituent units are copolymerized. The difference between Examples 3 and 4 is that a resin with one type of molecular weight is used in Example 4, whereas resins with two types of molecular weights are mixed in Example 3. The resin for forming the film of the heat-sealable resin layer in Example 3 contains terephthalic acid, 1,4-butanediol and dodecane diacid as monomer units at a ratio (terephthalic acid residue : 1,4-butanediol residue : dodecane diacid residue) of 100 : 112 : 13 on a molar basis. The resin for forming the film of the heat-sealable resin layer in Example 4 contains terephthalic acid, 1,4-butanediol and dodecane diacid as monomer units at a ratio (terephthalic acid residue : 1,4-butanediol residue : dodecane diacid residue) of 100 : 110 : 13 on a molar basis.

In the resin of Example 5, isophthalic acid, instead of the dodecanedionic acid in Examples 3 and 4, is block-polymerized as the polyester structure B with the polybutylene terephthalate structure. Therefore, the resin of Example 5 contains a polybutylene terephthalate structure (terephthalic acid and 1,4-butanediol as monomer units are two types of constituent units) and the polyester B structure (isophthalic acid as a monomer unit is one type of constituent unit), and has a structure in which a total of three types of constituent units are copolymerized. The resin for forming the film of the heat-sealable resin layer in Example 5 contains terephthalic acid, 1,4-butanediol and isophthalic acid as monomer units at a ratio (terephthalic acid residue : 1,4-butanediol residue : isophthalic acid residue) of 100 : 110 : 11 on a molar basis.

In Comparative Example 1, polybutylene terephthalate (having two types of constituent units: terephthalic acid and 1,4-butanediol) was prepared as a resin. In Comparative Example 2, polypropylene (having two types of constituent units: propylene and ethylene) was prepared as a resin.

Next, the resins were subjected to extrusion molding to manufacture a film (thickness: 50 µm in Examples 1 to 5 and Comparative Example 1 and 80 µm in Comparative Example 2).

The composition of the resin for forming the film of the heat-sealable resin layer was confirmed as follows. For GCMS, a derivatization method was applied as pretreatment, and GCMS measurement was then performed. In the 450°C simultaneous derivatization method, about 0.1 mg of a sample was placed in a sample cup, 1 µl of TMAH was added dropwise, measurement was performed under the following conditions, and the structure contained in the resin was qualitatively analyzed. As apparatuses, 7890A/5975C (Agilent Technologies) and a pyrolytic furnace AS-1020E (Frontier Lab) were used. As a column, InertCap 5MS/Sil was used. As temperature elevation conditions, the sample was held at 50°C for 5 minutes, heated at 10°C/min, and held at 320°C for 3 minutes. The split ratio was 1 : 50. Next, for NMR, the sample was dissolved in HFIP at about 4 wt% and diluted two-fold with CDCl₃ as pretreatment. Using AVANCEIIIHD (BRUKER) as an apparatus, NMR measurement was performed under the following conditions to identify the structure. Type of nucleus: 1H, solvent: CDCl₃ + HFIP (1 : 1), temperature: room temperature, and number of integrations: 64.

### <Manufacturing of exterior material>

A polyethylene terephthalate film (thickness: 25 µm in Examples 1 to 5 and Comparative Example 1) in which a surface to be bonded had been corona-treated was prepared as a base material layer. In Comparative Example 2, a film obtained by laminating a polyethylene terephthalate film (thickness: 12 µm) and a nylon film (thickness: 15 µm) with a two-liquid curable urethane adhesive was prepared as a base material layer (used with the polyethylene terephthalate film being on the outer side. In addition, an aluminum alloy foil (JIS H4160: 1994 A8021 H-O (thickness: 40 µm)) was provided as a barrier layer. As the heat-sealable resin layer, the films described above were used. Next, using a two-liquid curable urethane adhesive (polyester polyol and alicyclic isocyanate compound), the base material layer and the barrier layer were bonded to each other by a dry lamination method to produce a laminate in which a base material layer, an adhesive agent layer and a barrier layer were laminated in this order.

Next, the barrier layer of the obtained laminate and the film were bonded to each other with a two-liquid curable urethane adhesive (polyester polyol and alicyclic isocyanate compound) by a dry lamination method to laminate an adhesive layer (4 µm) and a heat-sealable resin layer (thickness: 50 µm in Examples 1 to 5 and Comparative Example 1, and 80 µm in Comparative Example 2) on the barrier layer. Next, the obtained laminate was aged and heated to obtain an exterior material for electrical storage devices including a laminate in which a base material layer, an adhesive agent layer, a barrier layer, an adhesive layer and a heat-sealable resin layer (film) were laminated in this order.

### <Measurement of melting peak temperature>

For the resin forming the film, the melting peak temperature was measured in accordance with the provisions of JIS K 7121: 2012 (Testing Methods for Transition Temperatures of Plastics (Amendment 1 of JIS K 7121: 1987)). The measurement was performed with a differential scanning calorimeter (DSC, Differential Scanning Calorimeter Q200 manufactured by TA Instruments). The measurement sample was held at -50°C for 15 minutes, then heated from -50°C to 300°C at a temperature rise rate of 10°C/min to measure the first melting peak temperature P (°C), and then held at 300°C for 2 minutes. Next, the measurement sample was cooled from 300°C to -50°C at a temperature lowering rate of 10°C/min, and held for 15 minutes. Further, the second melting peak temperature Q (°C) was measured by heating the measurement sample from -50°C to 300°C at a temperature rise rate of 10°C/min. The flow rate of the nitrogen gas was set to 50 ml/min. In accordance with the above procedure, the first measured melting peak temperature P (°C) and the second measured melting peak temperature Q (°C) were determined, and the first measured melting peak temperature was adopted as a melting peak temperature.

### <Measurement of glass transition temperature (Tg)>

The glass transition temperature of a resin forming the film was measured by dynamic mechanical analysis (DMA). The measurement was performed using Rheogel-E4000 manufactured by UBM Company. A film cut into 5 mm in width and 20 mm in length was set in chucks with the chuck-to-chuck distance being 10 mm. For the measurement conditions, the temperature was elevated from -30°C to 250°C at a temperature elevation rate of 5°C/min, the frequency was 10 Hz, the static load was 70 g, and the strain was 5 µm. The temperature at a peak of a loss sine (tan δ) obtained by dividing a loss elastic modulus by a storage elastic modulus was taken as a glass transition temperature.

### <Measurement of tensile rupture elongation (environment at -30°C, 23°C, 120°C or 150°C)>

The tensile rupture elongation of each film was measured. The measurement was performed using a tensile tester (AG-X plus (trade name) manufactured by Shimadzu Corporation) by a method as specified in JIS K 7127. The test sample width was that of a JIS-K 6251-7-type dumbbell, the gauge length was 15 mm, the tensile speed was 50 mm/min, and the test environment was that at each of -30°C, 23°C, 120°C and 150°C. The measurement was performed three times, and an average value of the three measurements was taken as the tensile rupture elongation. The results are shown in Table 1.

### [Measurement of indentation elastic modulus]

The laminate was cut, and the indentation elastic modulus was measured from the heat-sealing resin layer side. The indentation elastic modulus was measured in conformation to ISO 14577: 2015, where a method is used in which the indentation elastic modulus was measured on a surface of the sample in an environment at about 23°C and about 60% RH using a load ultra-microhardness tester equipped with a Vickers indenter (quadrilateral diamond indenter with a facing angle of 136 °). The measurement was performed with an indentation speed of 0.1 µm/sec, a depth of indentation of 2 µm, a holding time of 5 seconds and a drawing speed of 0.1 µm/sec. The load ultra-microhardness tester was PICODENTOR HM 500 (manufactured by FISCHER INSTRUMENTS K.K.). At least five samples were measured, and the average of the measured values was taken as a value of the indentation elastic modulus under the conditions. A suction board was used for fixing the sample. The results are shown in Table 1.

### <Evaluation of sealing strength (environment at -30°C, 23°C, 120°C or 150°C)>

As specified in JIS K 7127: 1999, the sealing strength of the exterior material at a measurement temperature of -30°C, 23°C, 120°C or 150°C was measured as follows. A test sample obtained by cutting the exterior material into a strip shape having a width of 15 mm in a transverse direction is prepared. Specifically, as shown in Fig. 9, each exterior material was cut to a size of 60 mm (transverse direction) × 200 mm (machine direction) (Fig. 9a). Next, the exterior material was double-folded in the machine direction at the position of the fold P (intermediate in the machine direction) in such a manner that the heat-sealable resin layers faced each other (Fig. 9b). The heat-sealable resin layers were heat-sealed on the inner side in the machine direction by about 10 mm from the fold P under the conditions of a seal width of 7 mm, a temperature of 240°C, and a surface pressure and sealing time allowing the thickness of the heat-sealed resin layer to become 80 ± 5% of that before sealing (Fig. 9c). In Fig. 9c, the shaded portion S is a heat-sealed portion. Next, a test piece 13 was obtained by cutting the sample in the machine direction (cutting the sample at the position of the two-dot chain line in Fig. 9d) in such a manner that the width in the transverse direction was 15 mm (Fig. 9e). Next, the test piece 13 was allowed to stand at each measurement temperature for 2 minutes, and the heat-sealable resin layer at the heat-sealed part was peeled at a speed of 300 mm/min with a tensile tester (AG-X plus (trade name) manufactured by Shimadzu Corporation) in an environment at each temperature (Fig. 10). The maximum strength during the peeling was taken as sealing strength (N/15 mm). The chuck-to-chuck distance was 50 mm. The evaluation criteria of sealing strength are as follows. Criteria A and B correspond to passing. The results are shown in Table 1.

### (Evaluation criteria of sealing strength)

A: The sealing strength is 80 N/15 mm or more at measurement temperatures of -30°C and 23°C. The sealing strength is 50 N/15 mm or more at measurement temperatures of 120°C and 150°C.
B: The sealing strength is 40 N/15 mm or more and less than 80 N/15 mm at measurement temperatures of -30°C and 23°C. The sealing strength is 30 N/15 mm or more and less than 50 N/15 mm at measurement temperatures of 120°C and 150°C.
C: The sealing strength is less than 40 N/15 mm at measurement temperatures of -30°C and 23°C. The sealing strength is less than 30 N/15 mm at measurement temperatures of 120°C and 150°C.

**[Table 1]**

| Table 1 | Heat-sealable resin layer (sealant film) | | | | | | | | | Exterior material for electrical storage devices | | | |
|---|---|---|---|---|---|---|---|---|---|---|---|---|---|
| | | | | | | | | | | Evaluation of sealing strength | | | |
| | Melting peak temperature (°C) | Tg (°C) | Main Component | Accessory component | Tensile rupture elongation (%) | | | | Indentation elastic modulus (GPa) | -30°C | 23°C | 120°C | 150°C |
| | | | | | -30°C | 23°C | 120°C | 150°C | | | | | |
| Example 1 | 213.7 | 25.0 | Polyester structure A (PBT structure) | Polyether structure | 343 | 789 | 810 | 873 | 0.72 | A | A | A | B |
| Example 2 | 214.6 | 38.4 | Polyester structure A (PBT structure) | Polyether structure | 377 | 646 | 802 | 843 | 2.6 | A | A | A | B |
| Example 3 | 201.9 | 44.8 | Polyester structure A (PBT structure) | Polyester structure B (derived from dodecanedionic acid) | 326 | 559 | 912 | 912 | 0.84 | A | A | A | A |
| Example 4 | 202.0 | 41.3 | Polyester structure A (PBT structure) | Polyester structure B (derived from dodecanedionic acid) | 257 | 620 | 902 | 968 | 0.83 | A | A | A | A |
| Example 5 | 204.3 | 62.0 | Polyester structure A (PBT structure) | Polyester structure B (derived from isophthalic acid) | 9 | 7 | 712 | 807 | 2.5 | B | B | B | A |
| Comparative Example 1 | 221.0 | 69.8 | Polyester structure A (PBT structure) | - | - | - | 538 | 659 | 2.6 | C | C | B | C |
| Comparative Example 2 | 140.6 | 0.0 | PP structure | - | - | - | >1000 | - | - | B | A | B | C |

In Table 1, "> 1,000" means that breakage did not occur even at the measurement limit which is 1,000%. The tensile rupture elongation at 150°C in Comparative Example 2 cannot be measured as the temperature exceeds the melting point of polypropylene. The tensile rupture elongations at -30°C and 23°C in Comparative Examples 1 and 2 and the indentation elastic modulus of Comparative Example 2 were not measured.

As described above, the present disclosure provides the invention of aspects as shown below.
Item 1. An exterior material for electrical storage devices including a laminate including at least a base material layer, a barrier layer and a heat-sealable resin layer in this order, in which
   the heat-sealable resin layer includes a film, and the film has a tensile rupture elongation of 750% or more in an environment at 150°C.
Item 2. The exterior material for electrical storage devices according to item 1, in which the film has a tensile rupture elongation of 650% or more in an environment at 120°C.
Item 3. The exterior material for electrical storage devices according to item 1 or 2, in which a resin forming the film includes at least a polyester structure A.
Item 4. The exterior material for electrical storage devices according to item 3, in which the polyester structure A is a polybutylene terephthalate structure.
Item 5. The exterior material for electrical storage devices according to item 3 or 4, in which the resin forming the film further includes at least one selected from the group consisting of a polyether structure and a polyester structure B.
Item 6. The exterior material for electrical storage devices according to item 5, in which the polyester structure B is a polyester structure obtained by polycondensation of a polyol forming the polyester structure A and at least one dicarboxylic acid selected from the group consisting of isophthalic acid, sebacic acid and dodecanedionic acid.
Item 7. The exterior material for electrical storage devices according to item 5 or 6, in which the polyether structure is a polyether structure derived from at least one selected from the group consisting of polytetramethylene ether glycol and neopentyl glycol.
Item 8. The exterior material for electrical storage devices according to any one of items 1 to 7, in which an indentation elastic modulus of the laminate from the heat-sealable resin layer side is 0.3 GPa or more.
Item 9. The exterior material for electrical storage devices according to any one of items 1 to 8, for an all-solid-state battery, a semi-solid-state battery, a pseudo-solid-state battery, a polymer battery, or an all-polymer battery.
Item 10. A film having a tensile rupture elongation of 750% or more in an environment of 150°C.
Item 11. The film according to item 10, in which the film has a tensile rupture elongation of 650% or more in an environment at 120°C.
Item 12. The film according to item 10 or 11, in which a resin forming the film includes at least a polyester structure A.
Item 13. The film according to item 12, in which the polyester structure A is a polybutylene terephthalate structure.
Item 14. The film according to item 12 or 13, in which the resin forming the film further includes at least one selected from the group consisting of a polyether structure and a polyester structure B.
Item 15. The film according to item 14, in which the polyester structure B is a polyester structure obtained by polycondensation of a polyol forming the polyester structure A and at least one dicarboxylic acid selected from the group consisting of isophthalic acid, sebacic acid and dodecanedionic acid.
Item 16. The film according to item 14 or 15, in which the polyether structure is a polyether structure derived from at least one selected from the group consisting of polytetramethylene ether glycol and neopentyl glycol.
Item 17. The film according to any one of items 10 to 16, in which an indentation elastic modulus of the film is 0.3 GPa or more.
Item 18. The film according to any one of items 10 to 17, which is used for a heat-sealable resin layer of an exterior material for electrical storage devices.
Item 19. A method for manufacturing an exterior material for electrical storage devices, including the step of preparing a laminate in which at least a base material layer, a barrier layer and a heat-sealable resin layer are laminated in this order,
   the heat-sealable resin layer including a film,
   the film having a tensile rupture elongation of 750% or more in an environment at 150°C.
Item 20. The method for manufacturing an exterior material for electrical storage devices according to item 19, in which the exterior material for electrical storage devices is to be used for an all-solid-state battery, a semi-solid-state battery, a pseudo-solid-state battery, a polymer battery, or an all-polymer battery.
Item 21. An electrical storage device in which an electrical storage device element including at least a positive electrode, a negative electrode and an electrolyte is housed in a packaging formed of the exterior material for electrical storage devices according to any one of items 1 to 9.

### DESCRIPTION OF REFERENCE SIGNS

1: Base material layer
2: Adhesive agent layer
3: Barrier layer
4: Heat-sealable resin layer
5: Adhesive layer
6: Surface coating layer
10: Exterior material for electrical storage devices
13: Test piece
41: First layer
42: Second layer
43: Third layer

## Claims

1. An exterior material for electrical storage devices comprising a laminate including at least a base material layer, a barrier layer and a heat-sealable resin layer in this order,
the heat-sealable resin layer including a film,
the film having a tensile rupture elongation of 750% or more in an environment at 150°C.

2. The exterior material for electrical storage devices according to claim 1, wherein the film has a tensile rupture elongation of 650% or more in an environment at 120°C.

3. The exterior material for electrical storage devices according to claim 1 or 2, wherein a resin forming the film includes at least a polyester structure A.

4. The exterior material for electrical storage devices according to claim 3, wherein the polyester structure A is a polybutylene terephthalate structure.

5. The exterior material for electrical storage devices according to claim 3 or 4, wherein the resin forming the film further includes at least one selected from the group consisting of a polyether structure and a polyester structure B.

6. The exterior material for electrical storage devices according to claim 5, wherein the polyester structure B is a polyester structure obtained by polycondensation of a polyol forming the polyester structure A and at least one dicarboxylic acid selected from the group consisting of isophthalic acid, sebacic acid and dodecanedionic acid.

7. The exterior material for electrical storage devices according to claim 5, wherein the polyether structure is a polyether structure derived from at least one selected from the group consisting of polytetramethylene ether glycol and neopentyl glycol.

8. The exterior material for electrical storage devices according to claim 1 or 2, wherein an indentation elastic modulus of the laminate from the heat-sealable resin layer side is 0.3 GPa or more.

9. The exterior material for electrical storage devices according to claim 1 or 2, for an all-solid-state battery, a semi-solid-state battery, a pseudo-solid-state battery, a polymer battery, or an all-polymer battery.

10. A film having a tensile rupture elongation of 750% or more in an environment of 150°C.

11. The film according to claim 10, wherein the film has a tensile rupture elongation of 650% or more in an environment at 120°C.

12. The film according to claim 10 or 11, wherein a resin forming the film includes at least a polyester structure A.

13. The film according to claim 12, wherein the polyester structure A is a polybutylene terephthalate structure.

14. The film according to claim 12, wherein the resin forming the film further includes at least one selected from the group consisting of a polyether structure and a polyester structure B.

15. The film according to claim 14, wherein the polyester structure B is a polyester structure obtained by polycondensation of a polyol forming the polyester structure A and at least one dicarboxylic acid selected from the group consisting of isophthalic acid, sebacic acid and dodecanedionic acid.

16. The film according to claim 14 or 15, wherein the polyether structure is a polyether structure derived from at least one selected from the group consisting of polytetramethylene ether glycol and neopentyl glycol.

17. The film according to claim 10 to 11, wherein an indentation elastic modulus of the film is 0.3 GPa or more.

18. The film according to claim 10 or 11, wherein the film is used for a heat-sealable resin layer of an exterior material for electrical storage devices.

19. A method for manufacturing an exterior material for electrical storage devices, comprising the step of preparing a laminate in which at least a base material layer, a barrier layer and a heat-sealable resin layer are laminated in this order,
the heat-sealable resin layer including a film,
the film having a tensile rupture elongation of 750% or more in an environment at 150°C.

20. The method for manufacturing an exterior material for electrical storage devices according to claim 19, wherein the exterior material for electrical storage devices is to be used for an all-solid-state battery, a semi-solid-state battery, a pseudo-solid-state battery, a polymer battery, or an all-polymer battery.

21. An electrical storage device in which an electrical storage device element including at least a positive electrode, a negative electrode and an electrolyte is housed in a packaging formed of the exterior material for electrical storage devices according to claim 1 or 2.
